(19) Europäisches Patentamt / European Patent Office / Office européen des brevets

(11) **EP 4 607 963 A1**

(12) **EUROPEAN PATENT APPLICATION**
published in accordance with Art. 153(4) EPC

(43) Date of publication:
**27.08.2025 Bulletin 2025/35**

(21) Application number: **23879596.7**

(22) Date of filing: **03.10.2023**

(51) International Patent Classification (IPC):
***H04S 7/00*** (2006.01)

(52) Cooperative Patent Classification (CPC):
**H04S 7/00**

(86) International application number:
**PCT/JP2023/036004**

(87) International publication number:
**WO 2024/084949 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.10.2022 US 202263417397 P**

(71) Applicant: **Panasonic Intellectual Property Corporation of America**
**Torrance, CA 90504 (US)**

(72) Inventors:
• **USAMI, Hikaru**
**Kadoma-shi, Osaka 571-8501 (JP)**
• **ISHIKAWA, Tomokazu**
**Kadoma-shi, Osaka 571-0057 (JP)**
• **ENOMOTO, Seigo**
**Kadoma-shi, Osaka 571-0057 (JP)**
• **NAKAHASHI, Kota**
**Kadoma-shi, Osaka 571-0057 (JP)**
• **EHARA, Hiroyuki**
**Kadoma-shi, Osaka 571-0057 (JP)**
• **YAMADA, Mariko**
**Kadoma-shi, Osaka 571-0057 (JP)**
• **MIYASAKA, Shuji**
**Neyagawa-shi, Osaka 572-0004 (JP)**

(74) Representative: **Novagraaf International SA**
**Chemin de l'Echo 3**
**1213 Onex, Geneva (CH)**

(54) **ACOUSTIC SIGNAL PROCESSING METHOD, COMPUTER PROGRAM, AND ACOUSTIC SIGNAL PROCESSING DEVICE**

(57)     An acoustic signal processing method includes: obtaining object information indicating a change in an object that causes wind and a predetermined timing related to the change in the object; and outputting aerodynamic sound data indicating an aerodynamic sound due to the wind, after a predetermined time from the predetermined timing indicated by the obtained object information, the predetermined time being based on the change in the object.

EP 4 607 963 A1

# FIG. 11

START

S10

Obtain object information indicating: change in object that causes wind; change in wind (wind speed) due to change in object; predetermined timing (timing of change in wind); and position of object

S20

Obtain second position information indicating position of listener

S30

Obtain aerodynamic sound data indicating aerodynamic sound

S40

Determine predetermined time based on wind (wind speed) and distance between position of listener and position of object

S50

Output sound data associated with object at predetermined timing

S60

Output aerodynamic sound data indicating aerodynamic sound caused by wind, after predetermined time from predetermined timing

END

**Description**

[Technical Field]

The present disclosure relates to an acoustic signal processing method, etc.

[Background Art]

Patent Literature (PTL) 1 discloses a technique related to a three-dimensional acoustic calculation method that is an acoustic signal processing method. In this acoustic signal processing method, the arrival time of sound to the listener (observer) is controlled so as to change according to the distance between the sound source and the listener as well as the speed of sound.

[Citation List]

[Patent Literature]

[PTL 1] Japanese Unexamined Patent Application Publication No. 2013-201577
[PTL 2] International Patent Application Publication No. 2021/180938

[Summary of Invention]

[Technical Problem]

With the technique disclosed in PTL 1, it may be difficult to provide a sense of realism to the listener.
In view of this, the present disclosure has an object to provide, for instance, an acoustic signal processing method capable of providing a listener with a sense of realism.

[Solution to Problem]

An acoustic signal processing method according to one aspect of the present disclosure includes: obtaining object information indicating a change in an object that causes wind and a predetermined timing related to the change in the object; and outputting aerodynamic sound data indicating an aerodynamic sound due to the wind, after a predetermined time from the predetermined timing indicated by the object information obtained, the predetermined time being based on the change in the object.
A computer program according to one aspect of the present disclosure is for causing a computer to execute the acoustic signal processing method described above.
An acoustic signal processing device according to one aspect of the present disclosure includes: an obtainer that obtains object information indicating a change in an object that causes wind and a predetermined timing related to the change in the object; and an outputter that outputs aerodynamic sound data indicating an aerodynamic sound due to the wind, after a predetermined time from the predetermined timing indicated by the object information obtained, the predetermined time being based on the change in the object.
Note that these general or specific aspects may be implemented using a system, a device, a method, an integrated circuit, a computer program, or a non-transitory computer-readable recording medium such as a CD-ROM, or any combination thereof.

[Advantageous Effects of Invention]

An acoustic signal processing method according to one aspect of the present disclosure is capable of providing a listener with a sense of realism.

[Brief Description of Drawings]

[FIG. 1]

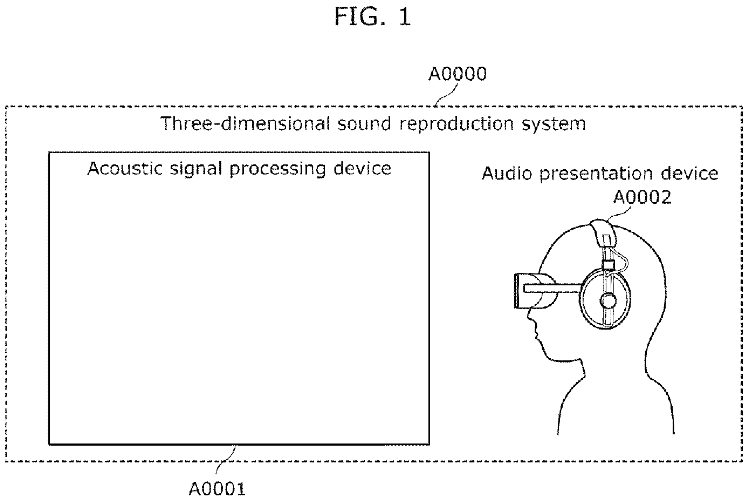

FIG. 1 illustrates a three-dimensional sound (immersive audio) reproduction system as one example of a system to which the acoustic processing or decoding processing according to the present disclosure is applicable.
[FIG. 2]

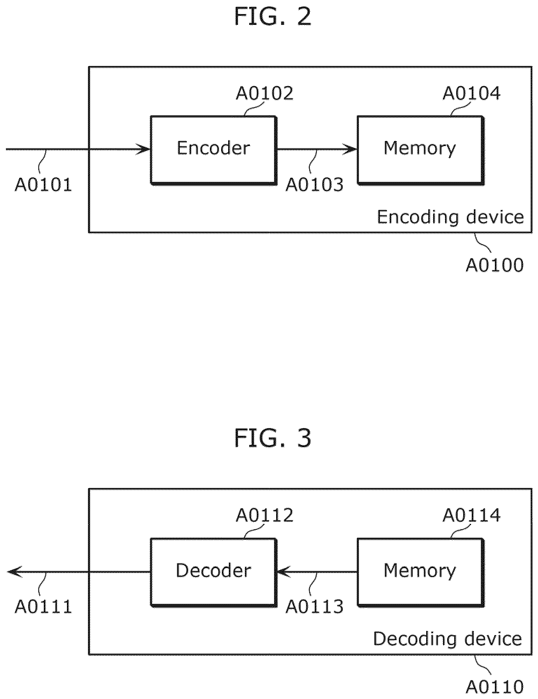

FIG. 2 is a functional block diagram illustrating the configuration of one example of an encoding device of the present disclosure.
[FIG. 3]
FIG. 3 is a functional block diagram illustrating the configuration of one example of a decoding device of the present disclosure.
[FIG. 4]

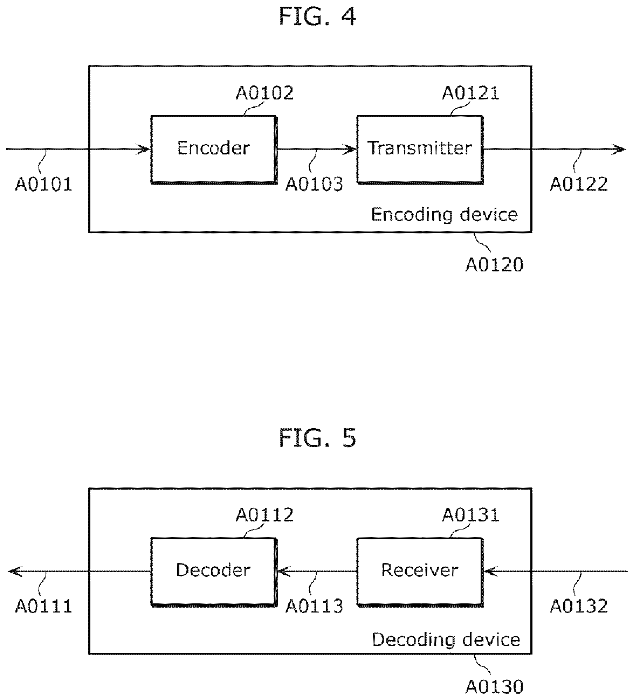

FIG. 4 is a functional block diagram illustrating the configuration of another example of an encoding device of the present disclosure.
[FIG. 5]
FIG. 5 is a functional block diagram illustrating the configuration of another example of a decoding device of the present disclosure.
[FIG. 6]

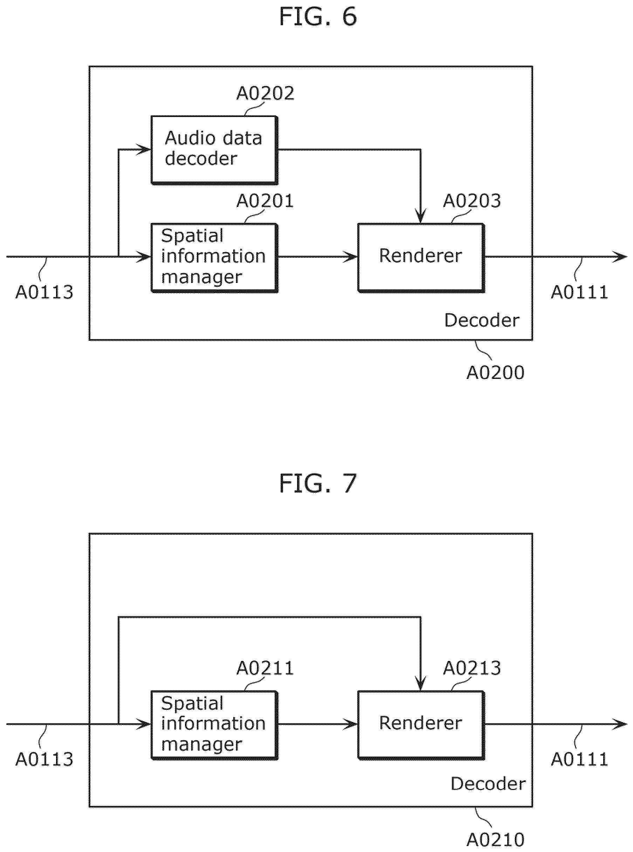

FIG. 6 is a functional block diagram illustrating the configuration of one example of the decoder in FIG. 3 or FIG. 5.
[FIG. 7]
FIG. 7 is a functional block diagram illustrating the configuration of another example of the decoder in FIG. 3 or FIG. 5.
[FIG. 8]

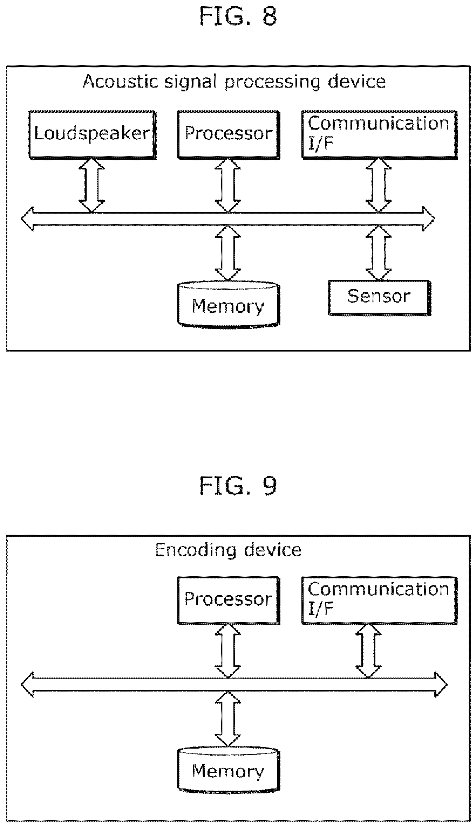

FIG. 8 illustrates one example of a physical configuration of an acoustic signal processing device.
[FIG. 9]
FIG. 9 illustrates one example of a physical configuration of an encoding device.
[FIG. 10]

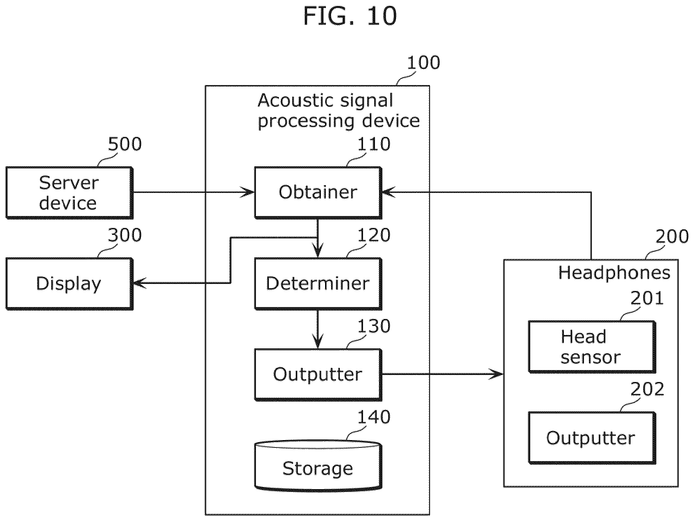

FIG. 10 is a block diagram illustrating a functional configuration of an acoustic signal processing device according to an embodiment of the present disclosure.
[FIG. 11]

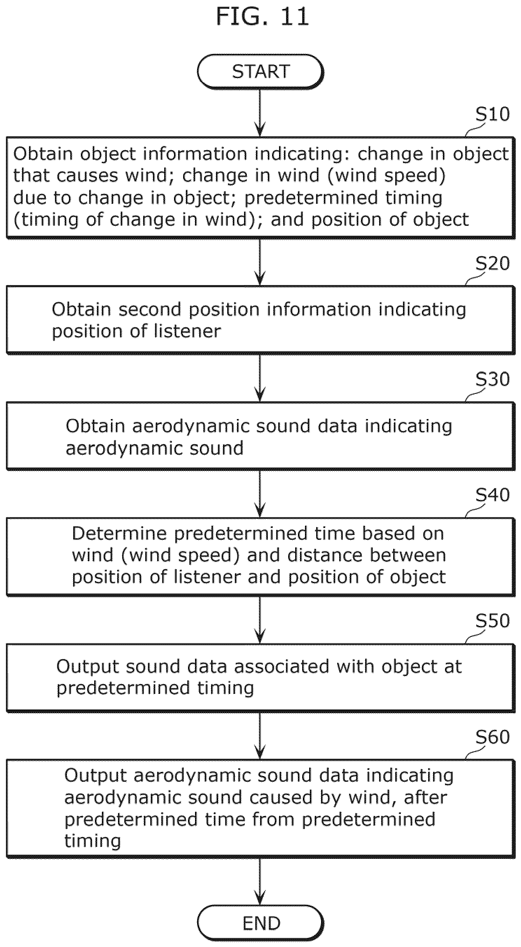

FIG. 11 is a flowchart of Operation Example 1 performed by an acoustic signal processing device according to an embodiment of the present disclosure.
[FIG. 12]

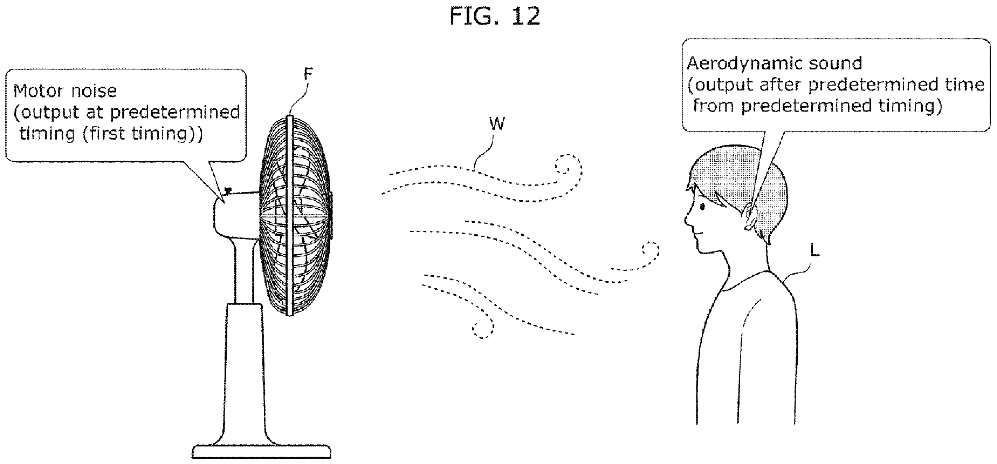

FIG. 12 illustrates an electric fan, which is an object according to Operation Example 1, and a listener.
[FIG. 13A]

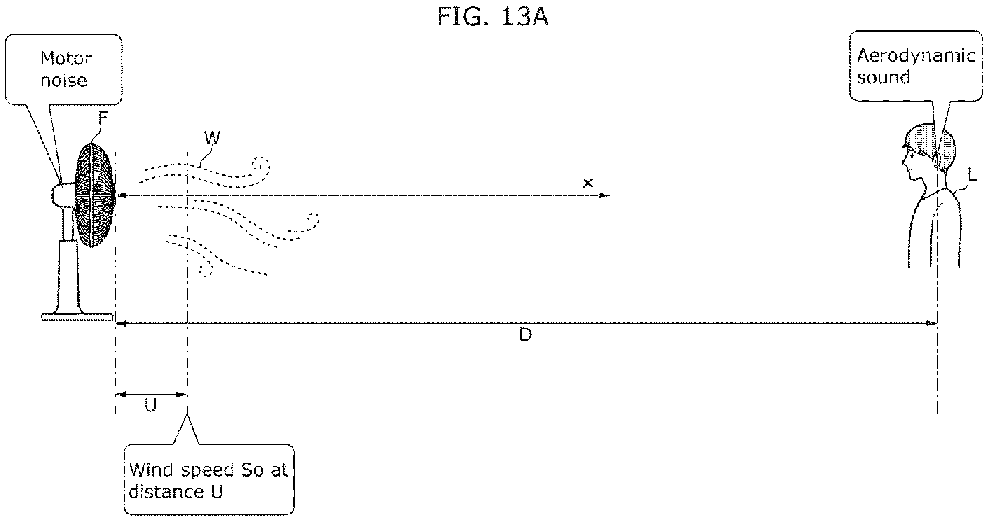

FIG. 13A illustrates a process in which a predetermined time is determined in step S40 illustrated in FIG. 11.
[FIG. 13B]

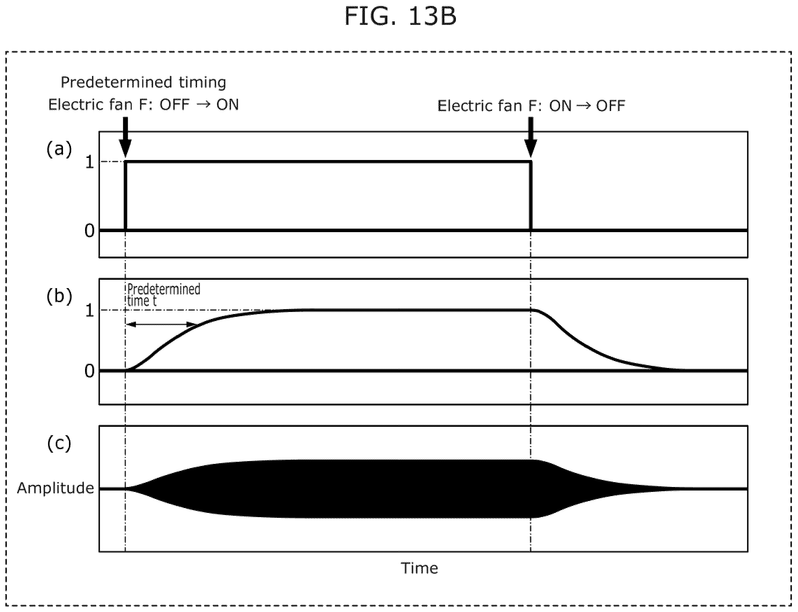

FIG. 13B illustrates a detailed example of the output of aerodynamic sound data according to an embodiment of the present disclosure.
[FIG. 13C]

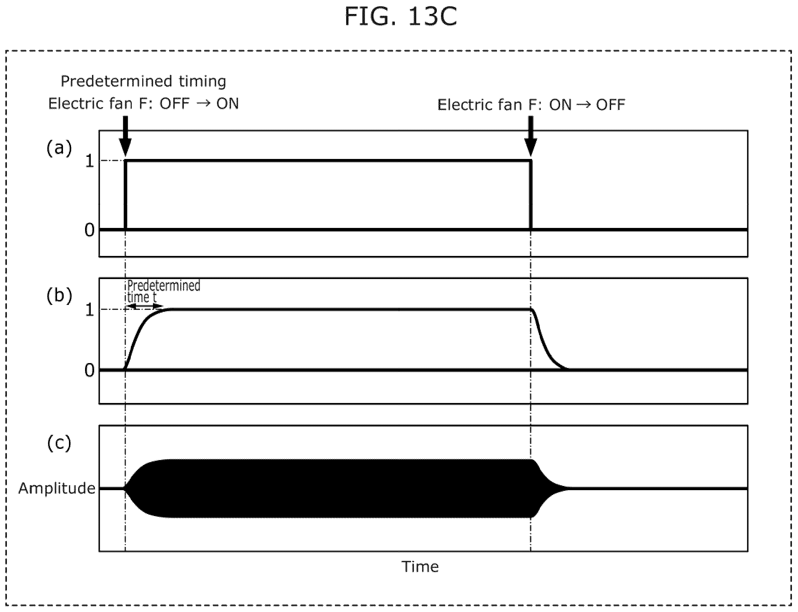

FIG. 13C illustrates another detailed example of the output of aerodynamic sound data according to an embodiment of the present disclosure.
[FIG. 14]

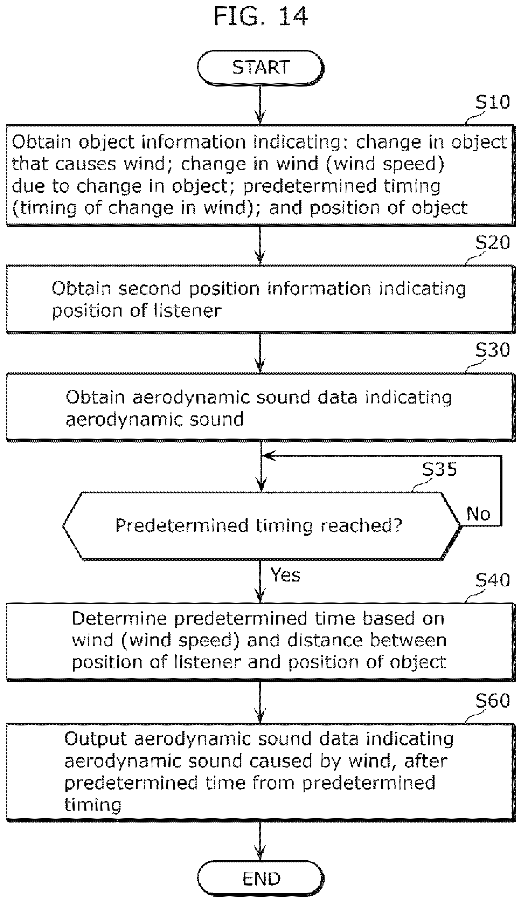

FIG. 14 is a flowchart of Operation Example 2 performed by an acoustic signal processing device according to an embodiment of the present disclosure.
[FIG. 15]

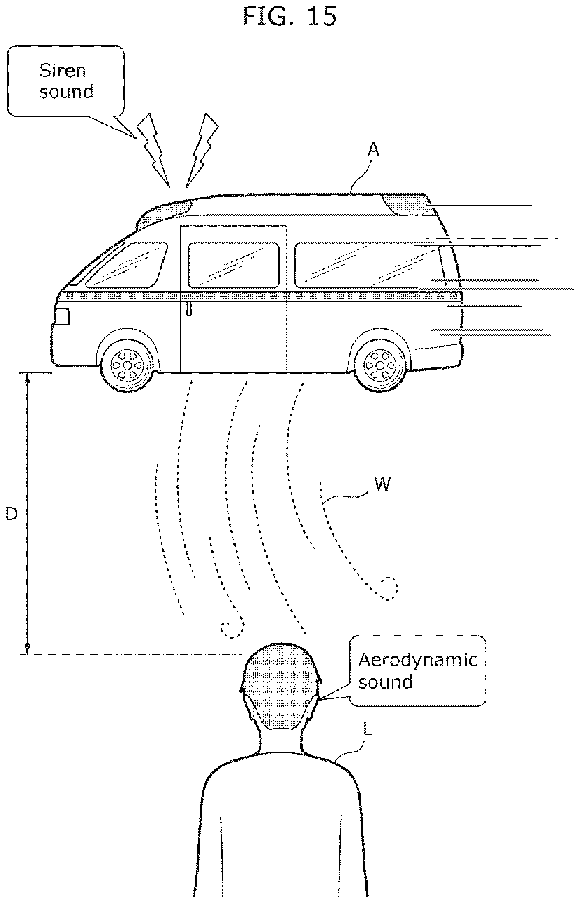

FIG. 15 illustrates an ambulance, which is an object according to Operation Example 2, and a listener.
[FIG. 16]

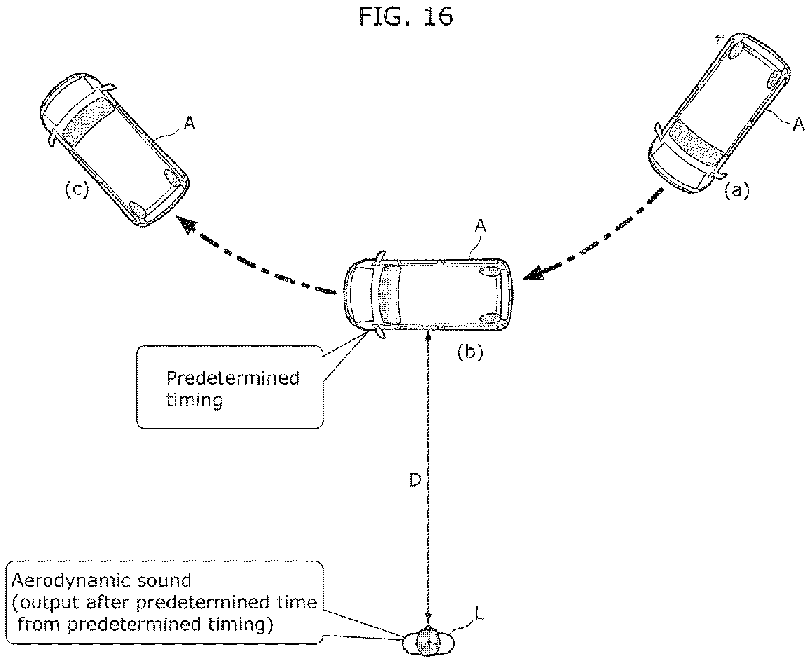

FIG. 16 is a schematic diagram for illustrating the predetermined timing according to Operation Example 2.
[FIG. 17]

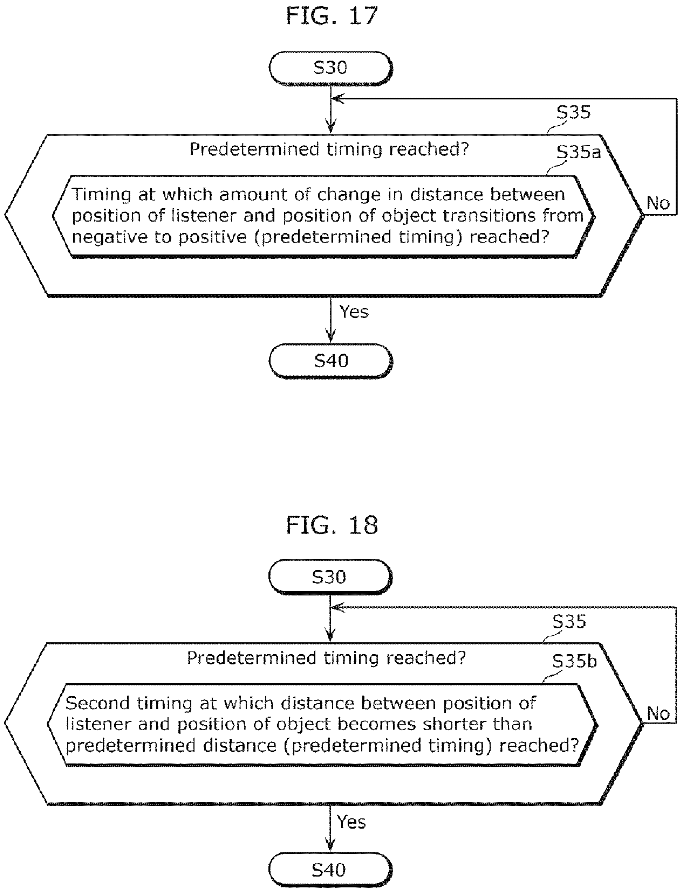

FIG. 17 is a flowchart for illustrating the details of step S35 according to Operation Example 2.
[FIG. 18]
FIG. 18 is a flowchart for illustrating the details of step S35 according to another, first example of Operation Example 2.
[FIG. 19]

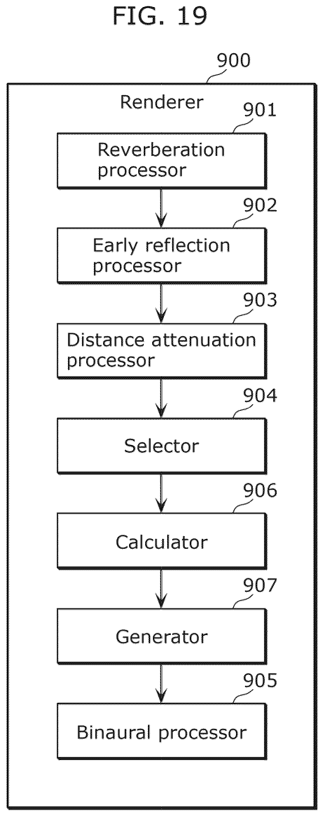

FIG. 19 illustrates one example of a functional block diagram and steps for explaining a case where the renderers of FIG. 6 and FIG. 7 perform pipeline processing.

[Description of Embodiments]

Underlying Knowledge Forming Basis of the Present Disclosure

Acoustic signal processing methods are known in which the arrival time of sound to a listener in a virtual space is controlled.

Patent Literature (PTL) 1 discloses a technique related to a three-dimensional acoustic calculation method that is an acoustic signal processing method. In this acoustic signal processing method, the arrival time of sound to the listener is controlled so as to change according to the distance between the sound source and the listener as well as the speed of sound. More specifically, the arrival time is controlled to become longer with increasing distance and to become longer as the speed of sound decreases. This allows the listener to recognize the distance between the object emitting sound, i.e., the sound source, and the listener themselves.

Such sounds subjected to this control are utilized in applications for reproducing stereophonic sound in a space (virtual space) where a user (listener) is present, such as a virtual reality (VR) or augmented reality (AR) space. Such sounds subjected to this control are utilized particularly in a virtual space where information of six degrees of freedom (6DoF) of the listener is sensed.

The sound reaching the listener disclosed in PTL 1 is the driving sound of a vehicle (moving sound source) which is an object in VR or AR, and is a sound emitted by the vehicle itself (such as engine sound). However, in a real-world space, for example, a vehicle causes wind when it is driving. Aerodynamic sound is generated when the wind caused by this vehicle reaches the ears of the listener. This aerodynamic sound is a sound generated when wind caused by an object (for example, a vehicle) reaches the listener, in accordance with, for example, the shape of the ears of listener L. Note that the object that causes the wind is not limited to an object that travels (moves) like the above-mentioned vehicle, and also includes objects that generate wind, like an electric fan.

However, PTL 1 does not disclose how to allow the listener to hear the aerodynamic sound. More specifically, PTL 1 does not disclose a technique for controlling the arrival time of the aerodynamic sound to the listener when the object causes wind. In the technique disclosed in PTL 1, the listener cannot hear the aerodynamic sound at an appropriate timing, causing the listener to feel a sense of incongruity and making it difficult for the listener to experience a sense of realism. Accordingly, there is a demand for an acoustic signal processing method and the like capable of providing a listener with a sense of realism.

An acoustic signal processing method according to a first aspect of the present disclosure includes: obtaining object information indicating a change in an object that causes wind and a predetermined timing related to the change in the object; and outputting aerodynamic sound data indicating an aerodynamic sound due to the wind, after a predetermined time from the predetermined timing indicated by the object information obtained, the predetermined time being based on the change in the object.

This allows for the aerodynamic sound data to be output at a timing when the predetermined time has elapsed from the predetermined timing. Therefore, the listener can hear the aerodynamic sound at an appropriate timing, making it less likely for the listener to feel a sense of incongruity and allowing the listener to experience a sense of realism. Stated differently, an acoustic signal processing method capable of providing a listener with a sense of realism is realized.

An acoustic signal processing method according to a second aspect of the present disclosure is the acoustic signal processing method according to the first aspect, wherein the object information indicates: a change in the wind due to the change in the object; and that the predetermined timing is a timing of the change in the wind, and the acoustic signal processing method further includes determining the predetermined time based on the wind indicated by the object information obtained.

This allows for the aerodynamic sound data to be output at a timing when the predetermined time determined based on the wind has elapsed from the timing when the wind changes, enabling the listener to hear the aerodynamic sound at a more appropriate timing.

An acoustic signal processing method according to a third aspect of the present disclosure is the acoustic signal processing method according to the second aspect, wherein the change in the wind indicated by the object information indicates a change in a wind speed of the wind, and in the determining, the predetermined time is determined based on the wind speed.

With this, the predetermined time is determined based on wind speed, thus enabling the listener to hear the aerodynamic sound at a more appropriate timing.

An acoustic signal processing method according to a fourth aspect of the present disclosure is the acoustic signal processing method according to the third aspect, wherein the aerodynamic sound is a sound generated at the wind speed after the change.

Accordingly, the aerodynamic sound that the listener hears in the virtual space can be made to more closely resemble the aerodynamic sound that the listener hears in the real-world space.

An acoustic signal processing method according to a fifth aspect of the present disclosure is the acoustic signal processing method according to the first aspect, wherein the object information indicates a position of the object, and the acoustic signal processing method further includes determining the predetermined time based on a distance between a position of a listener of the aerodynamic sound and the position of the object indicated by the object information obtained.

With this, the predetermined time is determined based on the distance, thus enabling the listener to hear the aerodynamic sound at a more appropriate timing.

An acoustic signal processing method according to a sixth aspect of the present disclosure is the acoustic signal processing method according to the third or fourth aspect, wherein the object information indicates a position of the object, and in the determining, the predetermined time is determined based on the wind speed and a distance between a position of a listener of the aerodynamic sound and the position of the object indicated by the object information obtained.

With this, the predetermined time is determined based on the wind speed and the distance, thus enabling the listener to hear the aerodynamic sound at a more appropriate timing.

An acoustic signal processing method according to a seventh aspect of the present disclosure is the acoustic signal processing method according to any one of the first to sixth aspects, wherein the object information indicates that the predetermined timing is a first timing at which to output sound data associated with the object, and in the outputting, the aerodynamic sound data is output after the predetermined time from the first timing indicated by the object information obtained.

With this, when the object is an object that generates sound, the aerodynamic sound data can be output at a timing when the predetermined time has elapsed from the first timing at which the sound is output, thus enabling the listener to hear the aerodynamic sound at a more appropriate timing.

An acoustic signal processing method according to an eighth aspect of the present disclosure is the acoustic signal processing method according to any one of the first to sixth aspects, wherein the object information indicates: a position of the object; and that the predetermined timing is a second timing at which a distance between a position of a listener of the aerodynamic sound and the position of the object will become shorter than a predetermined distance, and in the outputting, the aerodynamic sound data is output after the predetermined time from the second timing indicated by the object information obtained.

This allows for the aerodynamic sound data to be output at a timing when the predetermined time has elapsed from the second timing when the distance becomes shorter than the predetermined distance, i.e., when the object approaches the listener, enabling the listener to hear the aerodynamic sound at a more appropriate timing.

An acoustic signal processing method according to a ninth aspect of the present disclosure is the acoustic signal processing method according to any one of the first to sixth aspects, wherein the object information indicates: that a change in the wind due to the change in the object is a change in a direction of the wind; and that the predetermined timing is a third timing of an occurrence of the change in the direction of the wind, and in the outputting, the aerodynamic sound data is output after the predetermined time from the third timing indicated by the object information obtained.

This allows for the aerodynamic sound data to be output at a timing when the predetermined time has elapsed from the third timing when the change in the direction of the wind occurs, enabling the listener to hear the aerodynamic sound at a more appropriate timing.

An acoustic signal processing method according to a tenth aspect of the present disclosure is the acoustic signal processing method according to the sixth aspect, wherein the object is an object that generates: a sound indicated by sound data associated with the object; and the wind, and the aerodynamic sound is an aerodynamic sound generated by the wind reaching the listener, the wind being generated by the object.

Accordingly, the object can be an electric fan or the like that generates sound and wind, and the aerodynamic sound caused by wind blown from the object can be realized.

An acoustic signal processing method according to an eleventh aspect of the present disclosure is the acoustic signal processing method according to the tenth aspect, wherein t satisfies the following equation, where D is the distance, U is a distance from a position of the object at which the wind speed is So, and t is the predetermined time.

$$t = \{(D - U)^2\} / \{So \times U \times (\log(D) - \log(U))\}$$

This allows the determining step to determine the time from the predetermined timing until the wind generated by the object reaches the listener as the predetermined time. Therefore, the aerodynamic sound data can be output at a timing after such a predetermined time has elapsed from the predetermined timing, enabling the listener to hear the aerodynamic sound at a more appropriate timing.

An acoustic signal processing method according to a twelfth aspect of the present disclosure is the acoustic signal processing method according to the sixth aspect, wherein the object is an object that generates the wind due to movement of the position of the object, and the aerodynamic sound is an aerodynamic sound generated by the wind reaching the listener, the wind being due the movement.

Accordingly, the object can be a vehicle or the like that generates wind due to movement, and the aerodynamic sound caused by wind generated by the movement can be realized.

An acoustic signal processing method according to a thirteenth aspect of the present disclosure is the acoustic signal processing method according to the twelfth aspect, wherein the predetermined timing indicated by the object information is a timing at which an amount of change in the distance over time transitions from negative to positive.

This allows for the aerodynamic sound data to be output at a timing when the predetermined time has elapsed from the timing when the distance between the listener and the object becomes the shortest, enabling the listener to hear the aerodynamic sound at a more appropriate timing.

An acoustic signal processing method according to a fourteenth aspect of the present disclosure is the acoustic signal processing method according to the twelfth or thirteenth aspect, wherein t satisfies the following equation, where D is the distance, U is a distance from a position of the object at which the wind speed of the wind due the movement is So, and t is the predetermined time.

$$t = \{(D - U)^2\} / \{So \times U \times (\log(D) - \log(U))\}$$

This allows the determining step to determine the time from the predetermined timing until the wind generated by the object reaches the listener as the predetermined time. Therefore, the aerodynamic sound data can be output at a timing after such a predetermined time has elapsed from the predetermined timing, enabling the listener to hear the aerodynamic sound at a more appropriate timing.

A computer program according to a fifteenth aspect of the present disclosure is for causing a computer to execute the acoustic signal processing method according to any one of the first to fourteenth aspects.

Accordingly, the computer can execute the acoustic signal processing method described above in accordance with the computer program.

For example, an acoustic signal processing device according to a sixteenth aspect of the present disclosure includes: an obtainer that obtains object information indicating a change in an object that causes wind and a predetermined timing related to the change in the object; and an outputter that outputs aerodynamic sound data indicating an aerodynamic sound due to the wind, after a predetermined time from the predetermined timing indicated by the object information obtained, the predetermined time being based on the change in the object.

This allows for the aerodynamic sound data to be output at a timing when the predetermined time has elapsed from the predetermined timing. Therefore, the listener can hear the aerodynamic sound at an appropriate timing, making it less likely for the listener to feel a sense of incongruity and allowing the listener to experience a sense of realism. Stated differently, an acoustic signal processing device capable of providing a listener with a sense of realism is realized.

Furthermore, these general or specific aspects may be implemented using a system, a device, a method, an integrated circuit, a computer program, or a non-transitory computer-readable recording medium such as a CD-ROM, or any combination thereof.

Hereinafter, embodiments will be described with reference to the drawings.

The embodiments described below each show a general or specific example. The numerical values, shapes, materials, elements, the arrangement and connection of the elements, steps, and the processing order of the steps, etc., described in the following embodiments are mere examples, and are therefore not intended to limit the scope of the claims.

In the following description, ordinal numbers such as first and second may be given to elements. These ordinal numbers are given to elements in order to distinguish between the elements, and thus do not necessarily correspond to an order that has intended meaning. Such ordinal numbers may be switched as appropriate, new ordinal numbers may be given, or the ordinal numbers may be removed.

The drawings are schematic diagrams, and are not necessarily precise depictions. Accordingly, scaling is not necessarily consistent throughout the drawings. In the drawings, the same reference numerals are given to substantially similar configurations, and repeated description thereof may be omitted or simplified.

In the present specification, terms indicating relationships between elements such as "perpendicular" or numerical ranges include, in addition to their exact meanings, substantially equivalent ranges, for example, with differences of about several percent.

Embodiment

Examples of Devices to Which an Acoustic Processing Technique or Encoding/Decoding Technique of the Present Disclosure Can Be Applied

Three-dimensional Sound Reproduction System

FIG. 1 illustrates a three-dimensional sound (immersive audio) reproduction system A0000 as one example of a system to which the acoustic processing or decoding processing according to the present disclosure is applicable. Three-dimensional sound reproduction system A0000 includes acoustic signal processing device A0001 and audio presentation device A0002.

Acoustic signal processing device A0001 applies acoustic processing to an audio signal emitted by a virtual sound source to generate an acoustic-processed audio signal to be presented to a listener. The audio signal is not limited to speech and may be any audible sound. Acoustic processing is, for example, signal processing applied to the audio signal to reproduce one or a plurality of sound-related effects that sound generated from a sound source undergoes during the period from when the sound is emitted until the listener hears it. Acoustic signal processing device A0001 performs acoustic processing based on information describing factors that cause the aforementioned sound-related effects. The spatial information includes, for example, information indicating the positions of the sound source, listener, and surrounding objects, information indicating the shape of the space, and parameters related to sound propagation. Acoustic signal processing device A0001 is, for example, a personal computer (PC), smartphone, tablet, or game console.

The acoustic-processed signal is presented to the listener (user) from audio presentation device A0002. Audio presentation device A0002 is connected to acoustic signal processing device A0001 via wireless or wired communication. The acoustic-processed audio signal generated by acoustic signal processing device A0001 is transmitted to audio presentation device A0002 via wireless or wired communication. When audio presentation device A0002 is configured as a plurality of devices, such as a device for the right ear and a device for the left ear, the plurality of devices present sound in synchronization by communicating between the plurality of devices or between each of the plurality of devices and acoustic signal processing device A0001. Audio presentation device A0002 is, for example, headphones worn on the listener's head, earphones, a head-mounted display, or surround speakers configured with a plurality of fixed speakers.

Three-dimensional sound reproduction system A0000 may be used in combination with an image presentation device or stereoscopic image presentation device that provides an Extended Reality (ER) experience, including VR or AR, visually.

Although FIG. 1 illustrates a system configuration example in which acoustic signal processing device A0001 and audio presentation device A0002 are separate devices, three-dimensional sound reproduction system A0000 to which the acoustic signal processing method or decoding method according to the present disclosure is applicable is not limited to the configuration of FIG. 1. For example, acoustic signal processing device A0001 may be included in audio presentation device A0002, and audio presentation device A0002 may perform both acoustic processing and sound presentation. The acoustic processing described in the present disclosure may be divided between acoustic signal processing device A0001 and audio presentation device A0002 and performed, or a server connected via a network to acoustic signal processing device A0001 or audio presentation device A0002 may perform part or all of the acoustic processing described in the present disclosure.

Although the naming "acoustic signal processing device" A0001 is used in the above description, when acoustic signal processing device A0001 performs acoustic processing by decoding a bitstream generated by encoding at least a portion of data of an audio signal or spatial information used for acoustic processing, acoustic signal processing device A0001 may be called a decoding device.

Encoding Device Example

FIG. 2 is a functional block diagram illustrating the configuration of one example of encoding device A0100 of the present disclosure.

Input data A0101 is data to be encoded that includes spatial information and/or an audio signal to be input to encoder A0102. Spatial information will be described in detail later.

Encoder A0102 encodes input data A0101 to generate encoded data A0103. Encoded data A0103 is, for example, a bitstream generated by the encoding process.

Memory A0104 stores encoded data A0103. Memory A0104 may be, for example, a hard disk or a solid-state drive (SSD), or may be any other type of memory.

Although a bitstream generated by the encoding process was given as one example of encoded data A0103 stored in memory A0104 in the above description, encoded data A0103 may be data other than a bitstream. For example, encoding device A0100 may store, in memory A0104, converted data generated by converting the bitstream into a predetermined data format. The converted data may be, for example, a file storing one or a plurality of bitstreams or a multiplexed stream. Here, the file is, for example, a file having a file format such as ISO Base Media File Format (ISOBMFF). Encoded data A0103 may be in the form of a plurality of packets generated by dividing the above-mentioned bitstream or file. When the bitstream generated by encoder A0102 is to be converted into data different from the bitstream, encoding device A0100 may include a converter not shown in the figure, or may perform the conversion process using a central processing unit (CPU).

Decoding Device Example

FIG. 3 is a functional block diagram illustrating the configuration of one example of decoding device A0110 of the present disclosure.

Memory A0114 stores, for example, the same data as encoded data A0103 generated by encoding device A0100. Memory A0114 reads the stored data and inputs it as input data A0113 to decoder A0112. Input data A0113 is, for example, a bitstream to be decoded. Memory A0114 may be, for example, a hard disk or a SSD, or may be any other type of memory.

Decoding device A0110 may use, as input data A0113, converted data generated by converting the data read from memory A0114, rather than directly using the data stored in memory A0114 as input data A0113. The data before conversion may be, for example, multiplexed data storing one or a plurality of bitstreams. Here, the multiplexed data may be, for example, a file having a file format such as ISOBMFF. The data before conversion may be in the form of a plurality of packets generated by dividing the above-mentioned bitstream or file. When converting data different from the bitstream read from memory A0114 into a bitstream, decoding device A0110 may include a converter not shown in the figure, or may perform the conversion process using a CPU.

Decoder A0112 decodes input data A0113 to generate audio signal A0111 to be presented to a listener.

Another Encoding Device Example

FIG. 4 is a functional block diagram illustrating the configuration of another example of encoding device A0120 of the present disclosure. In FIG. 4, configurations having the same functions as those in FIG. 2 are given the same reference numerals as in FIG. 2, and explanations of these configurations are omitted.

Encoding device A0120 differs from encoding device A0100 in that while encoding device A0100 stored encoded data A0103 in memory A0104, encoding device A0120 includes transmitter A0121 that transmits encoded data A0103 to an external destination.

Transmitter A0121 transmits transmission signal A0122 to another device or server based on encoded data A0103 or data in another data format generated by converting encoded data A0103. The data used for generating transmission signal A0122 is, for example, the bitstream, multiplexed data, file, or packet explained in regard to encoding device A0100.

Another Decoding Device Example

FIG. 5 is a functional block diagram illustrating the configuration of another example of decoding device A0130 of the present disclosure. In FIG. 5, configurations having the same functions as those in FIG. 3 are given the same reference numerals as in FIG. 3, and explanations of these configurations are omitted.

Decoding device A0130 differs from decoding device A0110 in that while decoding device A0110 reads input data A0113 from memory A0114, decoding device A0130 includes receiver A0131 that receives input data A0113 from an external source.

Receiver A0131 receives reception signal A0132 thereby obtaining reception data, and outputs input data A0113 to be input to decoder A0112. The reception data may be the same as input data A0113 input to decoder A0112, or may be data in a data format different from input data A0113. When the reception data is data in a data format different from input data A0113, receiver A0131 may convert the reception data to input data A0113, or a converter not shown in the figure or a CPU included in decoding device A0130 may convert the reception data to input data A0113. The reception data is, for example, the bitstream, multiplexed data, file, or packet explained in regard to encoding device A0120.

Explanation of Functions of Decoder

FIG. 6 is a functional block diagram illustrating the configuration of decoder A0200, which is one example of decoder A0112 in FIG. 3 or FIG. 5.

Input data A0113 is an encoded bitstream and includes encoded audio data, which is an encoded audio signal, and metadata used for acoustic processing.

Spatial information manager A0201 obtains metadata included in input data A0113, and analyzes the metadata. The metadata includes information describing elements that act on sounds arranged in a sound space. Spatial information manager A0201 manages spatial information necessary for acoustic processing obtained by analyzing the metadata, and provides the spatial information to renderer A0203. Note that in the present disclosure, information used for acoustic processing is referred to as spatial information, but it may be referred to by other names. The information used for said acoustic processing may be referred to as, for example, sound space information or scene information. When the information used for acoustic processing changes over time, the spatial information input to renderer A0203 may be referred to as a spatial state, a sound space state, a scene state, or the like.

The spatial information may be managed for each sound space or for each scene. For example, when expressing different rooms as virtual spaces, spatial information for each room may be managed as a scene of a different sound space, or even for the same space, spatial information may be managed as different scenes according to the scene being expressed. In the management of spatial information, an identifier for identifying each item of spatial information may be assigned. The spatial information data may be included in a bitstream, which is a form of input data, or the bitstream may include an identifier of the spatial information, and the spatial information data may be obtained from somewhere other than from the bitstream. When the bitstream includes only the identifier of the spatial information, at the time of rendering, the spatial information data stored in the memory of acoustic signal processing device A0001 or in an external server may be obtained as input data using the identifier of the spatial information.

Note that the information managed by spatial information manager A0201 is not limited to information included in the bitstream. For example, input data A0113 may include data indicating characteristics or structure of a space obtained from a VR or AR software application or server as data not included in the bitstream. For example, input data A0113 may include data indicating characteristics or a position of a listener or object as data not included in the bitstream. Input data A0113 may include information obtained by a sensor included in a terminal that includes the decoding device as information indicating the position of the listener, or information indicating the position of the terminal estimated based on information obtained by the sensor. That is, spatial information manager A0201 may communicate with an external system or server and obtain spatial information and the position of the listener. Spatial information manager A0201 may obtain clock synchronization information from an external system and execute a process to synchronize with the clock of renderer A0203. The space in the above explanation may be a virtually formed space, that is, VR space, or it may be a real-world space (i.e., an actual space) or a virtual space corresponding to a real-world space, that is, AR or mixed reality (MR). The virtual space may also be called a sound field or sound space. The information indicating position in the above explanation may be information such as coordinate values indicating a position in space, information indicating a relative position with respect to a predetermined reference position, or information indicating movement or acceleration of a position in space.

Audio data decoder A0202 decodes encoded audio data included in input data A0113 to obtain an audio signal.

The encoded audio data obtained by three-dimensional sound reproduction system A0000 is, for example, a bitstream encoded in a predetermined format such as MPEG-H 3D Audio (ISO/IEC 23008-3). Note that MPEG-H 3D Audio is merely one example of an encoding method that can be used when generating encoded audio data to be included in the bitstream, and the bitstream may include encoded audio data encoded using other encoding methods. For example, the encoding method used may be a lossy codec such as MPEG-1 Audio Layer-3 (MP3), Advanced Audio Coding (AAC), Windows Media Audio (WMA), Audio Codec-3 (AC3), or Vorbis, or a lossless codec such as Apple Lossless Audio Codec (ALAC) or Free Lossless Audio Codec (FLAC), or any other arbitrary encoding method not mentioned above. For example, pulse code modulation (PCM) data may be considered as a type of encoded audio data. In such cases, the decoding process may, for example, when the number of quantization bits of the PCM data is N, convert the N-bit binary number into a numerical format (for example, floating-point format) that can be processed by renderer A0203.

Renderer A0203 receives an audio signal and spatial information as inputs, applies acoustic processing to the audio signal using the spatial information, and outputs acoustic-processed audio signal A0111.

Before starting rendering, spatial information manager A0201 reads metadata of the input signal, detects rendering items such as objects or sounds specified by the spatial information, and transmits the detected rendering items to renderer A0203. After rendering starts, spatial information manager A0201 obtains the temporal changes in the spatial information and the listener's position, and updates and manages the spatial information. Spatial information manager A0201 then transmits the updated spatial information to renderer A0203. Renderer A0203 generates and outputs an audio signal with acoustic processing added based on the audio signal included in input data A0113 and the spatial information received from spatial information manager A0201.

The update processing of the spatial information and the output processing of the audio signal added with acoustic processing may be executed in the same thread, or spatial information manager A0201 and renderer A0203 may be allocated to respective independent threads. When the update processing of the spatial information and the output processing of the audio signal added with acoustic processing are processed in different threads, the activation frequency of the threads may be set individually, or the processing may be executed in parallel.

By executing processing in different independent threads for spatial information manager A0201 and renderer A0203, computational resources can be preferentially allocated to renderer A0203, allowing for safe implementation even in cases of sound output processing where even slight delays cannot be tolerated, for example, sound output processing where a popping noise occurs if there is a delay of even one sample (0.02 msec). In this case, allocation of computational resources to spatial information manager A0201 is restricted. However, the update of spatial information (for example, a process such as updating the direction of the listener's face) is a process that is performed at a low frequency compared to the output processing of the audio signal. Therefore, since responding instantaneously is not necessarily required unlike the output processing of the audio signal, restricting the allocation of computational resources does not significantly affect the acoustic quality provided to the listener.

The update of spatial information may be executed periodically at predetermined times or intervals, or may be executed when predetermined conditions are met. The update of spatial information may be executed manually by the listener or the manager of the sound space, or execution may be triggered by changes in an external system. For example, when the listener operates a controller to instantly warp the position of their avatar, rapidly advance or rewind time, or when the manager of the virtual space suddenly changes the environment of the scene as a production effect, the thread in which spatial information manager A0201 is arranged may be activated as a one-time interrupt process in addition to periodic activation.

The role of the information update thread that executes the update processing of spatial information includes, for example, processing to update the position or orientation of the listener's avatar in the virtual space based on the position or orientation of the VR goggles worn by the listener, and updating the position of objects moving within the virtual space, and is handled within a processing thread that activates at a relatively low frequency of approximately several tens of Hz. Such processing that reflects the nature of direct sound may be performed in processing threads with low occurrence frequency. This is because the frequency at which the nature of direct sound changes is lower than the frequency of occurrence of audio processing frames for audio output. By doing so, the computational load of the processing can be relatively reduced, and the risk of pulsive noise occurring due to unnecessarily frequent information updates can be avoided.

FIG. 7 is a functional block diagram illustrating the configuration of decoder A0210, which is another example of decoder A0112 in FIG. 3 or FIG. 5.

Decoder A0210 illustrated in FIG. 7 differs from decoder A0200 illustrated in FIG. 6 in that input data A0113 includes an unencoded audio signal rather than encoded audio data. Input data A0113 includes an audio signal and a bitstream including metadata.

Spatial information manager A0211 is the same as spatial information manager A0201 in FIG. 6, so repeated explanation is omitted.

Renderer A0213 is the same as renderer A0203 in FIG. 6, so repeated explanation is omitted.

Note that while the configuration in FIG. 7 is referred to as decoder A0210 in the above description, it may also be called an acoustic processor that performs acoustic processing. A device including an acoustic processor may be called an acoustic processing device rather than a decoding device. Acoustic signal processing device A0001 may be called an acoustic processing device.

Physical Configuration of Acoustic Signal Processing Device

FIG. 8 illustrates one example of a physical configuration of an acoustic signal processing device. The acoustic signal processing device in FIG. 8 may be a decoding device. A portion of the configuration described here may be included in audio presentation device A0002. The acoustic signal processing device illustrated in FIG. 8 is one example of the above-mentioned acoustic signal processing device A0001.

The acoustic signal processing device in FIG. 8 includes a processor, memory, a communication I/F, a sensor, and a loudspeaker.

The processor is, for example, a central processing unit (CPU) or digital signal processor (DSP) or graphics processing unit (GPU), and the acoustic processing or decoding processing of the present disclosure may be performed by the CPU or DSP or GPU executing a program stored in the memory. The processor may be a dedicated circuit that performs signal processing on audio signals, including the acoustic processing of the present disclosure.

The memory includes, for example, random access memory (RAM) or read-only memory (ROM). The memory may include magnetic storage media such as hard disks or semiconductor memories such as solid state drives (SSDs). The memory may include internal memory incorporated in the CPU or GPU.

The communication interface (I/F) is, for example, a communication module that supports a communication method such as Bluetooth (registered trademark) or WiGig (registered trademark). The acoustic signal processing device illustrated in FIG. 8 includes a function to communicate with other communication devices via the communication I/F, and obtains a bitstream to be decoded. The obtained bitstream is, for example, stored in the memory.

The communication module includes, for example, a signal processing circuit that supports the communication method, and an antenna. In the above example, Bluetooth (registered trademark) or WiGig (registered trademark) were given as examples of the communication method, but the supported communication method may be Long Term Evolution (LTE), New Radio (NR), or Wi-Fi (registered trademark). The communication I/F may also be a wired communication method such as Ethernet (registered trademark), Universal Serial Bus (USB), or High-Definition Multimedia Interface (HDMI) (registered trademark), rather than the wireless communication methods described above.

The sensor performs sensing to estimate the position or orientation of the listener. More specifically, the sensor estimates the position and/or orientation of the listener based on one or more detection results of one or more of the position, orientation, movement, velocity, angular velocity, or acceleration of a part or all of the listener's body, such as the listener's head, and generates position information indicating the position and/or orientation of the listener. The position information may be information indicating the position and/or orientation of the listener in real-world space, or may be information indicating the displacement of the position and/or orientation of the listener with respect to the position and/or orientation of the listener at a predetermined time point. The position information may be information indicating a position and/or orientation relative to three-dimensional sound reproduction system A0000 or an external device including the sensor.

The sensor may be, for example, an imaging device such as a camera or a distance measuring device such as a light detection and ranging (LiDAR) distance measuring device, and may capture an image of the movement of the listener's head and detect the movement of the listener's head by processing the captured image. As the sensor, a device that performs position estimation using radio waves in any given frequency band such as millimeter waves may be used.

The acoustic signal processing device illustrated in FIG. 8 may obtain position information via the communication I/F from an external device including a sensor. In such cases, the acoustic signal processing device need not include a sensor. Here, an external device refers to, for example, audio presentation device A0002 described in FIG. 1, or a stereoscopic image reproduction device worn on the listener's head. In this case, the sensor is configured as a combination of various sensors, such as a gyro sensor and an acceleration sensor, for example.

As the speed of the movement of the listener's head, the sensor may detect, for example, the angular speed of rotation about at least one of three mutually orthogonal axes in the sound space as the axis of rotation or the acceleration of displacement in at least one of the three axes as the direction of displacement.

As the amount of the movement of the listener's head, the sensor may detect, for example, the amount of rotation about at least one of three mutually orthogonal axes in the sound space as the axis of rotation or the amount of displacement in at least one of the three axes as the direction of displacement. More specifically, sensor detects 6DoF (position (x, y, z) and angle (yaw, pitch, roll)) as the position of the listener. The sensor is configured as a combination of various sensors used for detecting movement, such as a gyro sensor and an acceleration sensor.

A sensor may be implemented by any device, such as a camera or a Global Positioning System (GPS) receiver, as long as it can detect the position of the listener. Position information obtained by performing self-localization estimation using laser imaging detection and ranging (LiDAR) or the like may be used. For example, when the audio signal reproduction system is implemented by a smartphone, the sensor is included in the smartphone.

The sensor may include a temperature sensor such as a thermocouple that detects the temperature of the acoustic signal processing device illustrated in FIG. 8, and a sensor that detects the remaining level of a battery included in or connected to the acoustic signal processing device.

The loudspeaker includes, for example, a diaphragm, a driving mechanism such as a magnet or voice coil, and an amplifier, and presents the acoustic-processed audio signal as sound to the listener. The loudspeaker operates the driving mechanism according to the audio signal (more specifically, a waveform signal indicating the waveform of the sound) amplified via the amplifier, and vibrates the diaphragm by means of the driving mechanism. In this way, the diaphragm vibrating according to the audio signal generates sound waves, which propagate through the air and are transmitted to the listener's ears, allowing the listener to perceive the sound.

Although in this example, the acoustic signal processing device illustrated in FIG. 8 includes a loudspeaker and provides the acoustic-processed audio signal via the loudspeaker, the means for providing the audio signal is not limited to this configuration. For example, the acoustic-processed audio signal may be output to external audio presentation device A0002 connected via a communication module. The communication performed by the communication module may be wired or wireless. As another example, the acoustic signal processing device illustrated in FIG. 8 may include a terminal that outputs an analog audio signal, and may present the audio signal from earphones or the like by connecting the earphone cable to the terminal. In this case, audio presentation device A0002, such as headphones, earphones, a head-mounted display, neck speakers, wearable speakers worn on the listener's head or a part of the body, or surround speakers configured with a plurality of fixed speakers, reproduces the audio signal.

Physical Configuration of Encoding Device

FIG. 9 illustrates one example of a physical configuration of an encoding device. The encoding device illustrated in FIG. 9 is one example of the above-mentioned encoding devices A0100 and A0120.

The encoding device in FIG. 9 includes a processor, memory, and a communication I/F.

The processor is, for example, a central processing unit (CPU) or digital signal processor (DSP), and the encoding processing of the present disclosure may be performed by the CPU or DSP executing a program stored in the memory. The processor may be a dedicated circuit that performs signal processing on audio signals, including the encoding processing of the present disclosure.

The memory includes, for example, random access memory (RAM) or read-only memory (ROM). The memory may include magnetic storage media such as hard disks or semiconductor memories such as solid state drives (SSDs). The memory may include internal memory incorporated in the CPU or GPU.

The communication interface (I/F) is, for example, a communication module that supports a communication method such as Bluetooth (registered trademark) or WiGig (registered trademark). The encoding device includes a function to communicate with other communication devices via the communication I/F, and transmits an encoded bitstream.

The communication module includes, for example, a signal processing circuit that supports the communication method, and an antenna. In the above example, Bluetooth (registered trademark) or WiGig (registered trademark) were given as examples of the communication method, but the supported communication method may be Long Term Evolution (LTE), New Radio (NR), or Wi-Fi (registered trademark). The communication I/F may also be a wired communication method such as Ethernet (registered trademark), Universal Serial Bus (USB), or High-Definition Multimedia Interface (HDMI) (registered trademark), rather than the wireless communication methods described above.

Configuration

Further, the configuration of acoustic signal processing device 100 according to an embodiment will be described. FIG. 10 is a block diagram illustrating the functional configuration of acoustic signal processing device 100 according to the present embodiment.

Acoustic signal processing device 100 according to the present embodiment is for outputting aerodynamic sound data indicating an aerodynamic sound caused by wind generated by an object in a virtual space (sound reproduction space). Acoustic signal processing device 100 according to the present embodiment is for various applications in a virtual space, such as virtual reality or augmented reality (VR or AR) applications.

The "object in a virtual space" is included in content to be displayed on display 300 that displays content (video in this example) executed in the virtual space. The object is not particularly limited as long as it is an object that causes wind.

The object is, for example, a moving object that generates wind due to the movement of the position of the object. The moving object includes, for example, an object indicating an animal, a plant, an artificial object, or a natural object. Examples of objects representing artificial objects include vehicles, bicycles, and aircraft. Examples of the artificial object include sports equipment, such as a baseball bat and a tennis racket; and furniture, such as a desk, a chair, and a wall clock. Note that the object is, as an example, at least one that can move or one that can be moved in the content, but is not limited thereto.

As another example, the object may be an object that can blow air. Such objects are, for example, electric fans, circulators, handheld fans, and air conditioners.

The aerodynamic sound according to the present embodiment will be described. Aerodynamic sound is the sound generated when wind caused by an object in a virtual space reaches the ear of a listener.

When the object is an object that can blow air, such as an electric fan, the aerodynamic sound is an aerodynamic sound generated by the wind caused by the object reaching the listener. More specifically, the aerodynamic sound is a sound generated when wind blown from the electric fan reaches the listener, according to, for example, the shape of the ear of the listener.

When the object is a moving object (for example, a vehicle), the aerodynamic sound is an aerodynamic sound generated when wind caused by the movement of the position of the object reaches the listener, and more specifically, is a sound generated when the wind reaches the listener, according to, for example, the shape of the ear of the listener.

The object may one that generates sound in addition to causing wind. The sound generated by the object is the sound indicated by the sound data associated with the object (hereinafter this may be referred to as object sound data). For example, when the object is an electric fan, the sound generated by the object is the motor noise generated by the motor included in the electric fan. For example, when the object is an ambulance, the sound generated by the object is the siren sound emitted from the ambulance.

In the present embodiment, the object is an electric fan, which is one example of an object that can blow air.

Acoustic signal processing device 100 outputs aerodynamic sound data indicating an aerodynamic sound in a virtual space to headphones 200.

Next, headphones 200 will be described.

Headphones 200 serve as a device that reproduces the aerodynamic sound, that is, an audio output device that presents the aerodynamic sound to the listener. More specifically, headphones 200 reproduce the aerodynamic sound based on the aerodynamic sound data output by acoustic signal processing device 100. This allows the listener to listen to the aerodynamic sound. Instead of headphones 200, another output channel, such as a loudspeaker, may be used.

As illustrated in FIG. 10, headphones 200 include head sensor 201 and outputter 202.

Head sensor 201 senses the position of the listener determined by coordinates on a horizontal plane and the height in the vertical direction in the virtual space, and outputs, to acoustic signal processing device 100, second position information indicating the position of the listener for the aerodynamic sound in the virtual space.

Head sensor 201 may sense information of 6DoF of the head of the listener. For example, head sensor 201 may be an inertial measurement unit (IMU), an accelerometer, a gyroscope, or a magnetic sensor, or a combination of these.

Outputter 202 is a device that reproduces a sound that reaches the listener in a sound reproduction space. More specifically, outputter 202 reproduces the aerodynamic sound based on aerodynamic sound data indicating the aerodynamic sound output from acoustic signal processing device 100.

When the object is an electric fan, sound data indicating the motor noise is output from acoustic signal processing device 100, and outputter 202 reproduces the motor noise based on the output sound data. Similarly, when the object is an ambulance, sound data indicating the siren sound is output from acoustic signal processing device 100, and outputter 202 reproduces the siren sound based on the output sound data.

Next, display 300 will be described.

Display 300 is a display device that displays content (e.g., a video) including an object in a virtual space. The process for display 300 to display the content will be described later. Display 300 is, for example, a display panel, such as a liquid crystal panel or an organic electroluminescence (EL) panel.

Further, acoustic signal processing device 100 illustrated in FIG. 10 will be described. In the present embodiment, acoustic signal processing device 100 outputs aerodynamic sound data to headphones 200 after a predetermined time from a predetermined timing.

As illustrated in FIG. 10, acoustic signal processing device 100 includes obtainer 110, determiner 120, outputter 130, and storage 140.

Obtainer 110 obtains object information. The object information is information indicating a change in the object that causes wind, the predetermined timing related to the change in the object, the change in the wind due to the change in the object, and the position of the object. Hereinafter, the object information is handled as information including first change information indicating a change in the object that causes wind, timing information indicating the predetermined timing related to the change in the object, second change information indicating the change in the wind due to the change in the object, and first position information indicating the position of the object.

When the object is an object that generates sound, the object information includes sound data (object sound data) indicating the sound. The object information may include geometry information indicating the shape of the object.

Obtainer 110 obtains second position information. The second position information indicates, as described above, the position of the listener in a virtual space. Obtainer 110 obtains aerodynamic sound data indicating aerodynamic sound. Aerodynamic sound data is stored in storage 140, and obtainer 110 obtains the aerodynamic sound data stored in storage 140.

Obtainer 110 may obtain, for example, the object information, second position information, and aerodynamic sound data from an input signal, or may obtain the object information, second position information, and aerodynamic sound data from a source other than the input signal. The input signal will be described below. Hereinafter, object sound data and aerodynamic sound data may collectively be referred to as sound data.

The input signal includes, for example, spatial information, sensor information, and sound data (audio signal). The above information and sound data may be included in one input signal, or the above-mentioned information and sound data may be included in a plurality of separate signals. The input signal may include a bitstream including sound data and metadata (control information), and in such cases, the metadata may include spatial information and information for identifying the sound data.

The first change information, timing information, second change information, first position information, geometry information, object sound data, second position information, and aerodynamic sound data explained above may be included in the input signal. More specifically, the first change information, timing information, second change information, first position information, and geometry information may be included in the spatial information, and the second position information may be generated based on information obtained from sensor information. The sensor information may be obtained from head sensor 201, or may be obtained from another external device.

The spatial information is information related to the sound space (three-dimensional sound field) created by three-dimensional sound reproduction system A0000, and includes information about objects included in the sound space and information about the listener. The objects include sound source objects that emit sound and become sound sources, and non-sound-emitting objects that do not emit sound. The non-sound-emitting object functions as an obstacle object that reflects sound emitted by the sound source object, but a sound source object may also function as an obstacle object that reflects sound emitted by another sound source object. The obstacle object may also be called a reflection object.

Information commonly assigned to both sound source objects and non-sound-emitting objects includes position information, geometry information, and attenuation rate of loudness when the object reflects sound.

The position information is represented by coordinate values of three axes, for example, the X-axis, the Y-axis, and the Z-axis of Euclidean space, but it does not necessarily have to be three-dimensional information. The position information may be, for example, two-dimensional information represented by coordinate values of two axes, the X-axis and the Y-axis. The position information of the object is defined by a representative position of the shape expressed by a mesh or voxel.

The geometry information may include information about the material of the surface.

The attenuation rate may be expressed as a real number less than or equal to 1 and greater than or equal to 0, or may be expressed as a negative decibel value. Since loudness does not increase from reflection in real-world space, the attenuation rate is set to a negative decibel value. However, for example, to create an eerie atmosphere in a non-realistic space, an attenuation rate greater than or equal to 1, that is, a positive decibel value, may be intentionally set. The attenuation rate may be set to different values for each of a plurality of frequency bands, or may be set independently for each frequency band. In cases where the attenuation rate is set for each type of material of the object surface, a value of the corresponding attenuation rate may be used based on information about the surface material.

Information commonly assigned to both sound source objects and non-sound-emitting objects may include information indicating whether the object belongs to an animate thing or information indicating whether the object is a moving object. When the object is a moving object, the position information may move over time, and the changed position information or the amount of change is transmitted to renderers A0203 and A0213.

Information related to the sound source object includes, in addition to the information commonly assigned to both sound source objects and non-sound-emitting objects mentioned above, object sound data and information necessary for radiating the object sound data into the sound space. The object sound data is data representing sound perceived by the listener, indicating information such as the frequency and intensity of the sound. The object sound data is typically a PCM signal, but may also be data compressed using an encoding method such as MP3. In such cases, since the signal needs to be decoded at least before reaching the generator (generator 907 to be described later with reference to FIG. 19), renderers A0203 and A0213 may include a decoder (not illustrated). Alternatively, the signal may be decoded in audio data decoder A0202.

At least one item of object sound data may be set for one sound source object, and a plurality of items of object sound data may be set. Identification information for identifying each item of object sound data may be assigned, and as information related to the sound source object, the identification information of the object sound data may be retained as metadata.

As information necessary for radiating object sound data into the sound space, for example, information on a reference loudness that serves as a standard when reproducing the object sound data, information related to the position of the sound source object, information related to the orientation of the sound source object, and information related to the directivity of the sound emitted by the sound source object may be included.

The information on the reference loudness may be, for example, the root mean square value of the amplitude of the object sound data at the sound source position when radiating the object sound data into the sound space, and may be expressed as a floating-point decibel (dB) value. For example, when the reference loudness is 0 dB, the information on the reference loudness may indicate that the sound is to be radiated into the sound space from the position indicated by the above-mentioned position information at the same loudness, without increasing or decreasing it, of the signal level indicated by the object sound data. The information on the reference loudness may indicate that, when it is -6 dB, the sound is to be radiated into the sound space from the position indicated by the above-mentioned position information at approximately half the loudness of the signal level indicated by the object sound data. The information on the reference loudness may be assigned to a single item of object sound data or collectively to a plurality of items of object sound data.

For example, information indicating time-series variations in the loudness of the sound source may be included as information on loudness included in the information necessary for radiating object sound data into the sound space. For example, when the sound space is a virtual conference room and the sound source is a speaker, the loudness transitions intermittently over short periods of time. Expressing it even more simply, it can also be said that sound portions and silent portions occur alternately. When the sound space is a concert hall and the sound source is a performer, the loudness is maintained for a certain duration of time. When the sound space is a battlefield and the sound source is an explosive, the loudness of the explosion sound becomes large for only an instant and then continues to be silent thereafter. In this way, the loudness information of the sound source includes not only information on the magnitude of sound but also information on the transition of sound magnitude, and such information may be used as information indicating the characteristics of the object sound data.

Here, the information on the transition of sound magnitude may be data showing frequency characteristics in chronological order. The information on the transition of sound magnitude may be data indicating the duration of a sound interval. The information on the transition of sound magnitude may be data indicating the chronological sequence of durations of sound intervals and silent intervals. The information on the transition of sound magnitude may be data that enumerates, in chronological order, a plurality of sets of data including a duration during which the amplitude of the sound signal can be considered stationary (can be considered approximately constant) and the amplitude value of said signal during that duration. The information on the transition of sound magnitude may be data of a duration during which the frequency characteristics of the sound signal can be considered stationary. The information on the transition of sound magnitude may be data that enumerates, in chronological order, a plurality of sets of data including a duration during which the frequency characteristics of the sound signal can be considered stationary and the frequency characteristic data during that duration. The information on the transition of sound magnitude may be in the format of, for example, data indicating the general shape of a spectrogram. The loudness that serves as the standard for the above-mentioned frequency characteristics may be used as the reference loudness. The information indicating the reference loudness and the information indicating the characteristics of the object sound data may be used not only to calculate the loudness of direct sound or reflected sound to be perceived by the listener, but also for selection processing for selecting whether or not to make the listener perceive the sound.

Information regarding orientation is typically expressed in terms of yaw, pitch, and roll. Alternatively, the orientation information may be expressed in terms of azimuth (yaw) and elevation (pitch), omitting the rotation of roll. The orientation information may change over time, and when changed, it is transmitted to renderers A0203 and A0213.

Information related to the listener is information regarding the position information and orientation of the listener in the sound space. The position information is represented by the position on the X-, Y-, and Z-axes of Euclidean space, but it does not necessarily have to be three-dimensional information and may be two-dimensional information. Information regarding orientation is typically expressed in terms of yaw, pitch, and roll. Alternatively, the orientation information may be expressed in terms of azimuth (yaw) and elevation (pitch), omitting the rotation of roll. The position information and orientation information may change over time, and when changed, they are transmitted to renderers A0203 and A0213.

The sensor information includes the rotation amount or displacement amount detected by the sensor worn by the listener, and the position and orientation of the listener. The sensor information is transmitted to renderers A0203 and A0213, and renderers A0203 and A0213 update the information on the position and orientation of the listener based on the sensor information. The sensor information may use position information obtained by performing self-localization estimation by a mobile terminal using the global positioning system (GPS), a camera, or laser imaging detection and ranging (LiDAR), for example. Information obtained from outside through a communication module, other than from a sensor, may also be detected as sensor information. Information indicating the temperature of acoustic signal processing device 100, and information indicating the remaining level of the battery may be obtained as sensor information from the sensor. Information indicating the computational resources (CPU capability, memory resources, PC performance) of acoustic signal processing device 100 or audio presentation device A0002 may be obtained in real time as sensor information.

In the present embodiment, obtainer 110 obtains the object information from storage 140, but obtainer 110 is not limited to this example. For example, obtainer 110 may obtain the object information from a device (for example, server device 500, such as a cloud server) other than acoustic signal processing device 100. Obtainer 110 also obtains the second position information from headphones 200 (head sensor 201, more specifically). The source is however not limited thereto.

Next, the information included in the object information will be described.

First, the first change information will be described.

The first change information indicates a change in an object that generates wind. In the present embodiment, the change in the object refers to a change in the state of the object. Here, because the object is an electric fan, examples of changes in the state of the object include the following.

For example, a change in the state of the object is that the electric fan has been switched from ON to OFF or vice versa (hereinafter sometimes referred to as "ON/OFF switching"). As another example, a change in the state of the object is that the switch indicating the speed of the electric fan has been switched from low to high (hereinafter sometimes referred to as "wind speed switching"). As another example, a change in the state of the object is that the switch indicating the oscillation of the electric fan has been switched from no oscillation to oscillation (hereinafter sometimes referred to as "wind direction switching").

Next, the second change information will be described.

The second change information indicates a change in wind due to a change in the object. The second change information indicates, as a change in wind due to a change in the object, a change in the wind speed or a change in the wind direction. In the present embodiment, the content of the information indicated by the second change information changes according to a change in the state of the object indicated by the first change information.

When the change in the state of the object indicated by the first change information is "ON/OFF switching", the second change information indicates, for example, that the wind speed has been switched from 0 m/s to V1 m/s (V1 > 0). When the change in the state of the object indicated by the first change information is "wind speed switching", the second change information indicates, for example, that the wind speed has been switched from V2 m/s to, for example, V3 m/s (V3 > V2). When the change in the state of the object indicated by the first change information is "wind direction switching", the second change information indicates, for example, that the wind direction has been switched from a constant state to a varying state. Thus, the second change information may be information that depends on the first change information.

Note that the above-mentioned V1, V2, and V3 indicating wind speed are, for example, the wind speed at the position where the electric fan, which is the object, is placed.

Next, the timing information will be described.

Timing information is information indicating a predetermined timing related to a change in the object. As described above, acoustic signal processing device 100 outputs aerodynamic sound data to headphones 200 after a predetermined time from this predetermined timing. The predetermined timing indicates the timing at which elapse of the predetermined time for determining when to output aerodynamic sound data begins.

The predetermined timing indicated by the timing information is the timing of a change in wind, and more specifically, the timing of a change in wind due to a change in the object. For example, the predetermined timing is the timing at which the wind speed changes or the timing at which the wind direction changes due to a change in the object.

Next, a case where the predetermined timing is the timing at which the wind speed changes will be described.

As an example of wind speed changing, an example where the electric fan, which is the object, is switched from OFF to ON can be given. Here, for example, the wind speed changes from 0 m/s to V1 m/s, and the predetermined timing is the timing at which the wind speed changes, that is, the timing at which the wind speed changes from 0 m/s to V1 m/s. Note that when the electric fan is switched from OFF to ON, as described above, the electric fan generates motor noise. Therefore, in this case, the predetermined timing is the timing at which the wind speed changes, as well as the timing (first timing) for outputting the sound data (object sound data) associated with the electric fan, which is the object. Stated differently, acoustic signal processing device 100 according to the present embodiment (more specifically, outputter 130) outputs the sound data (object sound data) associated with the electric fan at the predetermined timing (first timing). Note that the timing information included in the object information indicates that the predetermined timing is the timing of a change in wind, and is also the first timing.

The predetermined timing may be, for example, a timing specified by the administrator of acoustic signal processing device 100.

Next, the first position information will be described.

As described above, an object in a virtual space is included in content (e.g., a video) to be displayed on display 300, and in the present embodiment, it is an electric fan.

The first position information indicates where in the virtual space the electric fan is located at a certain time point. In the virtual space, for example, the electric fan may be moved as a result of the user picking up and moving the electric fan. To address this, obtainer 110 obtains the first position information continuously. Obtainer 110, for example, obtains the first position information each time the spatial information is updated by spatial information managers A0201 and A0211.

Next, the sound data including the object sound data associated with the object and the aerodynamic sound data will be described.

The sound data including the object sound data and aerodynamic sound data described in the present specification may be, but is not limited to, a sound signal such as pulse code modulation (PCM) data; the sound data may be any information indicating the characteristics of sound.

As one example, assuming the sound signal is a noise signal with a loudness of X decibels, the sound data related to that sound signal may be PCM data itself indicating that sound signal, or may be data consisting of information indicating that the component is a noise signal and information indicating that the loudness is X decibels. As another example, assuming the sound signal is a noise signal with a predetermined characteristic of Peak/Dip in frequency components, the sound data related to that sound data may be the PCM data itself indicating that sound signal, or may be data consisting of information indicating that the component is a noise signal and information indicating Peak/Dip of the frequency components.

Note that in the present specification, a sound signal based on sound data means PCM data indicating that sound data.

The aerodynamic sound data is stored in storage 140 in advance, as described above. The aerodynamic sound data is data of a recording of sound resulting from wind reaching a human ear or a model simulating the human ear. In the present embodiment, the aerodynamic sound data is data of a recording of sound resulting from wind reaching a model simulating a human ear. A dummy head microphone or the like is used as a model simulating a human ear, and aerodynamic sound data is recorded.

As described above, in the present embodiment, the wind changes due to a change in the object. The aerodynamic sound is an aerodynamic sound caused by the wind before the change or the wind after the change. The aerodynamic sound may be an aerodynamic sound caused by the wind after the change, for example, an aerodynamic sound caused by the wind at the wind speed after the change, or an aerodynamic sound caused by the wind at the wind direction after the change.

Next, the geometry information will be described.

The geometry information indicates the shape of the object in the virtual space. The geometry information indicates the shape of the object, more specifically, the three-dimensional shape of the object as a rigid body. The shape of the object is, for example, represented by a sphere, a rectangular parallelepiped, a cube, a polyhedron, a cone, a pyramid, a cylinder, or a prism alone or in combination. Note that the geometry information may be expressed, for example, by mesh data, or by voxels, point groups in three dimensions, or a set of planes formed of vertices with three-dimensional coordinates.

Note that the first change information includes object identification information for identifying the object. The timing information also includes object identification information. The second change information also includes object identification information. The first position information also includes object identification information. The object sound data also includes object identification information. The geometry information also includes object identification information.

Assume that obtainer 110 obtains the first change information, timing information, second change information, first position information, object sound data, and geometry information independently of each other. Even in this case, the object identification information included in each of the first change information, timing information, second change information, first position information, object sound data, and geometry information is referred to so as to identify the objects indicated by the first change information, timing information, second change information, first position information, object sound data, and geometry information. For example, the objects indicated by each of the first change information, timing information, second change information, first position information, object sound data, and geometry information can be here easily identified as the same electric fan. Stated differently, six items of object identification information of the first change information, timing information, second change information, first position information, object sound data, and geometry information obtained by obtainer 110 are referred to so as to clarify that the first change information, timing information, second change information, first position information, object sound data, and geometry information are related to the electric fan. Accordingly, the first change information, timing information, second change information, first position information, object sound data, and geometry information are associated as information indicating the electric fan.

Next, the second position information will be described.

The listener can move in the virtual space. The second position information indicates where in the virtual space the listener is located at a certain time point. Note that since the listener can move in the virtual space, obtainer 110 obtains the second position information continuously. Obtainer 110, for example, obtains the second position information each time the spatial information is updated by spatial information managers A0201 and A0211.

The first change information, timing information, second change information, first position information, geometry information, object sound data, second position information, and aerodynamic sound data may be included in metadata, control information, or header information included in the input signal. When the sound data including object sound data and aerodynamic sound data is a sound signal (PCM data), information identifying the sound signal may be included in metadata, control information, or header information, and the sound signal may be included elsewhere other than in the metadata, control information, or header information. That is, acoustic signal processing device 100 (more specifically, obtainer 110) may obtain metadata, control information, or header information included in the input signal, and perform acoustic processing based on the metadata, control information, or header information. It is sufficient so long as acoustic signal processing device 100 (more specifically, obtainer 110) obtains the first change information, timing information, second change information, first position information, geometry information, object sound data, second position information, and aerodynamic sound data; the source from which they are obtained is not limited to the input signal. The sound data including object sound data and aerodynamic sound data and the metadata may be stored in a single input signal or may be separately stored in plural input signals.

Sound signals other than the sound data including object sound data and aerodynamic sound data may be stored as audio content information in the input signal. The audio content information may be subjected to encoding processing such as MPEG-H 3D Audio (ISO/IEC 23008-3) (hereinafter, referred to as MPEG-H 3D Audio). The encoding processing technology is not limited to MPEG-H 3D Audio; other known technologies may be used. The information such as the first change information, timing information, second change information, first position information, geometry information, object sound data, second position information, and aerodynamic sound data may be subjected to encoding processing.

That is, acoustic signal processing device 100 obtains the sound signal and metadata included in the encoded bitstream. In acoustic signal processing device 100, audio content information is obtained and decoded. In the present embodiment, acoustic signal processing device 100 functions as a decoder (e.g., decoders A0200 and A0210) included in a decoding device (e.g., decoding devices A0110 and A0130), and more specifically, functions as renderers A0203 and A0213 included in the decoder. Note that the term "audio content information" in the present disclosure should be interpreted as the sound signal itself, or as information including first change information, timing information, second change information, first position information, geometry information, object sound data, second position information, and aerodynamic sound data, in accordance with the technical content.

Obtainer 110 outputs the obtained object information and second position information to determiner 120 and outputter 130.

Determiner 120 determines the predetermined time based on the wind indicated by the object information obtained by obtainer 110. That is, determiner 120 determines the predetermined time based on the wind caused by the object.

For example, determiner 120 determines the predetermined time based on the wind speed indicated by the second change information included in the obtained object information, and the distance between the position of the listener and the position of the object. When the predetermined time is t seconds, as one example, t satisfies t > 0, but is not limited to this; the predetermined time may be, for example, greater than or equal to 0.1 seconds and less than or equal to 5 seconds. Determiner 120 is capable of determining a time specified by the administrator of acoustic signal processing device 100 as the predetermined time, for example. Determiner 120 calculates the distance as follows.

Determiner 120 calculates the distance between the position of the listener and the position of the object based on the first position information included in the object information obtained by obtainer 110, and the obtained second position information. As described above, obtainer 110 obtains the first position information and the second position information in the virtual space each time the spatial information is updated by spatial information managers A0201 and A0211. Determiner 120 calculates the distance between the position of the listener and the position of the object in the virtual space based on a plurality of items of first position information and a plurality of items of second position information obtained each time the spatial information is updated.

Determiner 120 determines the predetermined time and outputs it to outputter 130.

Outputter 130 outputs the aerodynamic sound data obtained by obtainer 110 after the predetermined time determined by determiner 120 from the predetermined timing indicated by the object information obtained by obtainer 110. Here, outputter 130 outputs the aerodynamic sound data to headphones 200. This allows headphones 200 to reproduce the aerodynamic sound indicated by the output aerodynamic sound data. Stated differently, the listener is able to listen to the aerodynamic sound after the predetermined time from the predetermined timing.

Storage 140 is a storage device that stores computer programs to be executed by obtainer 110, determiner 120, and outputter 130, as well as stores object information and aerodynamic sound data.

Here, the geometry information according to the present embodiment will be described again. The geometry information indicates the shape of the object (i.e., the electric fan), and is used for generating a video of the object in the virtual space. That is, the geometry information is also used for generating a content (for example, a video) to be displayed on display 300.

Obtainer 110 outputs the obtained geometry information to display 300 as well. Display 300 obtains the geometry information output by obtainer 110. Display 300 further obtains attribute information indicating an attribute (for example, the color), other than the shape, of the object (i.e., the electric fan) in the virtual space. Display 300 may directly obtain the attribute information from a device (e.g., server device 500) other than acoustic signal processing device 100, or may obtain the attribute information from acoustic signal processing device 100. Display 300 generates content (for example, a video) based on the obtained geometry information and attribute information, and displays the content.

Next, Operation Example 1 of an acoustic signal processing method performed by acoustic signal processing device 100 will be described.

Operation Example 1

FIG. 11 is a flowchart of Operation Example 1 performed by acoustic signal processing device 100 according to the present embodiment. FIG. 12 illustrates electric fan F, which is an object according to Operation Example 1, and listener L.

As illustrated in FIG. 11, first, obtainer 110 obtains object information (S10). As described above, the object information includes first change information indicating a change in the object that causes wind W, timing information indicating the predetermined timing related to the change in the object, second change information indicating the change in wind W due to the change in the object, and first position information indicating the position of the object. The object information includes object sound data indicating the motor noise and geometry information. This step S10 corresponds to the obtaining step.

Here, the second change information indicates, as a change in wind W due to a change in the object, a change in the wind speed of wind W. The predetermined timing indicated by the timing information is the timing of a change in wind W, and more specifically, the timing of a change in wind W due to a change in the object.

Next, obtainer 110 obtains second position information indicating the position of listener L in the virtual space from headphones 200 (S20). Obtainer 110 further obtains aerodynamic sound data indicating aerodynamic sound stored in storage 140 (S30).

Next, determiner 120 determines the predetermined time based on the wind speed indicated by the second change information and the distance between the position of listener L and the position of the object (electric fan F) (S40). This step S40 corresponds to the determining step.

Next, outputter 130 outputs, at the predetermined timing, the sound data (object sound data) associated with electric fan F (S50). Then, after the predetermined time from the predetermined timing, outputter 130 outputs the aerodynamic sound data indicating aerodynamic sound caused by wind W (S60). This step S60 corresponds to the outputting step.

Here, the predetermined timing and predetermined time in the present operation example will be described.

Here, the predetermined timing is the timing of a change in wind W, and the timing at which the wind speed changes due to a change in the object. As one example, when listener L is viewing content in which electric fan F is displayed on display 300, the predetermined timing is the timing at which electric fan F is switched from OFF to ON.

In a real-world space, listener L hears the aerodynamic sound at a timing upon elapse of the time it takes wind W caused by electric fan F to reach listener L, from the timing at which electric fan F is switched from OFF to ON (that is, the predetermined timing). Accordingly, determiner 120 may determine the time from the predetermined timing until wind W caused by electric fan F reaches listener L as the predetermined time.

FIG. 13A illustrates the process in which the predetermined time is determined in step S40 illustrated in FIG. 11.

The distance between the position of listener L and the position of the object (electric fan F) is defined as D. More specifically, the distance between the position of the ear of listener L and the position of the object (electric fan F) is defined as D. Note that distance D is calculated by determiner 120 based on the first position information included in the object information obtained by obtainer 110, and the obtained second position information.

The distance from the position of the object (electric fan F) at which the wind speed of wind W generated by the object, which is electric fan F, becomes So is defined as U. The direction from electric fan F toward listener L is defined as the x-axis direction, and the distance from electric fan F in the x-axis direction is defined as x. Since wind speed V of wind W is inversely proportional to distance x, wind speed V and distance x satisfy the following equation.

$$V = So \times (U/x)$$

The average wind speed up to the position at distance D satisfies the following equation.

[Math. 1]

$$\frac{\int_{U}^{D} So \times \left(\frac{U}{x}\right) dx}{(D - U)} = \frac{So \times U \times (\log(D) - \log(U))}{(D - U)}$$

t, which is the time (predetermined time) from the timing at which electric fan F is switched from OFF to ON (that is, the predetermined timing) until wind W caused by electric fan F, which is the object, reaches listener L, is a value obtained by dividing the distance by the average wind speed, and satisfies the following equation.

$$t = \{(D - U)^2\} / \{So \times U \times (\log(D) - \log(U))\}$$

Note that "^" in the above equation represents the exponentiation operator.

As described above, in step S60, at the timing when predetermined time t has elapsed from the predetermined timing, the aerodynamic sound data is output.

This allows listener L to hear the aerodynamic sound output from headphones 200 at a timing when an amount of time (predetermined time t) it takes wind W caused by electric fan F to reach listener L elapses from the timing (that is, the predetermined timing) at which electric fan F is switched from OFF to ON. Accordingly, listener L can hear the aerodynamic sound at the same timing as in real-world space, that is, at an appropriate timing, making it less likely for listener L to feel a sense of incongruity, allowing listener L to experience a sense of realism.

Furthermore, in this operation example, the predetermined timing is the timing at which electric fan F is switched from OFF to ON, and corresponds to the first timing at which the object sound data associated with the object, electric fan F, is output.

It goes without saying that the above operation includes the meaning "from the predetermined timing to the timing when predetermined time t has elapsed, the aerodynamic sound indicated by the aerodynamic sound data is output such that it becomes a sound with an amplitude perceivable by listener L". This is, for example, realized by a filter with a time constant of predetermined time t during the output of aerodynamic sound data. More specifically, the following may be done.

FIG. 13B illustrates a detailed example of the output of aerodynamic sound data according to the present embodiment. FIG. 13C illustrates another detailed example of the output of aerodynamic sound data according to the present embodiment.

In FIG. 13B, (a) illustrates a trigger signal indicating ON/OFF changes of electric fan F. In FIG. 13B, (a) illustrates a trigger signal where the value is "0" when electric fan F is OFF, and the value is "1" when electric fan F is ON. In FIG. 13B, (b) illustrates the trigger signal multiplied by time constant t. That is, the trigger signal is subjected to a LowPass filter with a time constant of predetermined time t. In FIG. 13B, (c) illustrates the aerodynamic sound data with amplitude amplified according to the magnitude of the output signal of the LowPass filter.

This allows for the operation in which aerodynamic sound data is output at the timing when predetermined time t has elapsed to be simulated very easily. This also allows for automatic simulation of operation when the reason for the occurrence of aerodynamic sound ceases (the operation when electric fan F changes from ON to OFF).

Here, t does not necessarily have to be a value calculated exactly based on the following equation, and may be a value simply approximated such that t becomes larger as distance D becomes larger.

$$t = \{(D - U)^2\} / \{So \times U \times (\log(D) - \log(U))\}$$

Note that "^" in the above equation represents the exponentiation operator.

In FIG. 13C, (a), similar to (a) in FIG. 13B, illustrates a trigger signal indicating ON/OFF changes of electric fan F.

In FIG. 13C, (b), similar to (b) in FIG. 13B, illustrates the trigger signal multiplied by time constant t, and more specifically, the trigger signal multiplied by time constant t smaller than time constant t in (b) in FIG. 13B. In FIG. 13C, (c) illustrates the aerodynamic sound data controlled according to the value of the trigger signal multiplied by time constant t as illustrated in (b) in FIG. 13C.

As described above, the predetermined timing is the timing at which electric fan F is switched from OFF to ON, and corresponds to the first timing at which the object sound data associated with the object, electric fan F, is output.

Therefore, with the processing of step S50, at the timing when electric fan F is switched from OFF to ON, listener L can hear the motor noise of electric fan F output from headphones 200. Furthermore, with the processing of step S60, after listener L hears the motor noise, at a timing when the time it takes wind W caused by electric fan F being switched from OFF to ON to reach listener L elapses, listener L can hear the aerodynamic sound output from headphones 200.

In a real-world space, the motor noise reaches listener L at the speed of sound and is heard by listener L, and the aerodynamic sound is heard by listener L when wind W reaches listener L. In a real-world space, it is generally the case that the speed of sound is faster than the wind speed, and in this operation example, similar to the real-world space, listener L first hears the motor noise and then hears the aerodynamic sound. Accordingly, listener L can hear the motor noise (sound indicated by the sound data associated with the object) and the aerodynamic sound at the same timing as in real-world space, that is, at an appropriate timing, making it less likely for listener L to feel a sense of incongruity, allowing listener L to experience a sense of realism.

In Operation Example 1, the timing at which the wind speed changes, which is also the timing (first timing) for outputting the sound data (object sound data) associated with the electric fan F, is used as the predetermined timing, but the predetermined timing is not limited to this example.

For example, there may be cases where the object information indicates a change in the direction of wind W due to a change in the object (electric fan F). More specifically, the object information indicates, as a change in wind W due to a change in the object (electric fan F), a change in the direction (wind direction) of wind W. This case is, for example, when the change in the state of the object indicated by the first change information is "wind direction switching" and the second change information indicates that the wind direction has been switched from a constant state to a varying state.

In this case, the timing information included in the object information indicates that the predetermined timing is a third timing at which a change in the direction (wind direction) of wind W occurred.

In this way, when a change in the wind direction of electric fan F occurs, the state of wind W reaching listener L changes, and thus the aerodynamic sound that listener L hears also changes. Therefore, in step S60 illustrated in FIG. 11, outputter 130 may output the aerodynamic sound data indicating aerodynamic sound caused by wind W after the predetermined time from the third timing (predetermined timing) indicated by the object information.

Furthermore, the predetermined timing and the predetermined time are not limited to those shown in Operation Example 1. The predetermined timing may be a timing specified by a user (for example, the administrator of acoustic signal processing device 100) (a specified timing), and the predetermined time may be a time specified by the administrator (a predetermined time). Determiner 120 may determine the timing and time specified by the user as the predetermined timing and the predetermined time. For example, acoustic signal processing device 100 may include an input interface, and the input interface may receive the timing and the time specified by the user, and determiner 120 may determine the timing and the time received by the input interface as the predetermined timing and the predetermined time. In such cases, the administrator specifies the timing and time so that listener L can hear the aerodynamic sound at the same timing as in real-world space.

In this case as well, listener L can hear the aerodynamic sound at the same timing as in real-world space, that is, at an appropriate timing, making it less likely for listener L to feel a sense of incongruity, allowing listener L to experience a sense of realism.

In Operation Example 1 of the embodiment, the aerodynamic sound data is stored in storage 140 in advance, but this example is non-limiting. For example, determiner 120 may generate the aerodynamic sound data. For example, determiner 120 may obtain the noise signal and process the obtained noise signal with each of a plurality of band-emphasis filters to generate the aerodynamic sound data.

In Operation Example 1 of the embodiment, determiner 120 determined the predetermined time based on the wind speed indicated by the second change information and the distance between the position of listener L and the position of the object (electric fan F), but this example is non-limiting. For example, the object information includes first position information indicating the position of the object, and determiner 120 may determine the predetermined time based on the distance between the position of listener L of the aerodynamic sound and the position of the object indicated by the first position information included in the obtained object information. For example, a predetermined time corresponding to a reference distance may be determined. The predetermined time may be determined such that the predetermined time becomes longer as the distance between the position of listener L of the aerodynamic sound and the position of the object becomes greater than the reference distance, and the predetermined time becomes shorter as the distance between the position of listener L of the aerodynamic sound and the position of the object becomes shorter than the reference distance.

Variation(s) of Embodiment(s)

Hereinafter, a variation of the embodiment will be described. The following description will focus on the differences from the embodiment, and description of points in common will be omitted or simplified.

Configuration

In the variation, acoustic signal processing device 100 according to the embodiment is used, but the object in the virtual space is different. The object according to the present variation is a vehicle that is a moving object. More specifically, the object is an ambulance. In such cases, the aerodynamic sound is the sound generated when wind W caused by the movement of the position of object reaches listener L. Moreover, the object, which is an ambulance, is an object that generates sound, namely a siren sound.

The object information according to the present variation is information indicating a change in the object that causes wind W, the predetermined timing related to the change in the object, the change in wind W due to the change in the object, and the position of the object. Note that, as in the embodiment, the object information is handled as information including first change information indicating a change in the object that causes wind W, timing information indicating the predetermined timing related to the change in the object, second change information indicating the change in wind W due to the change in the object, and first position information indicating the position of the object.

The first change information indicates a change in the object that causes wind W, and in the present variation, the change in the object refers to a change in the position of the object.

The first position information indicates where in the virtual space the ambulance is located at a certain time point. In the virtual space, for example, the ambulance may travel and its position may move as a result of being operated by a driver. To address this, obtainer 110 obtains the first position information continuously.

The second change information indicates a change in wind W due to a change in the object. In the present embodiment, the content of the information indicated by the second change information changes according to a change in the position of the object indicated by the first change information.

For example, when the first change information indicates that the position of the object has changed, the second change information indicates that the wind speed of wind W generated by the movement of the object has changed from a first predetermined value to a second predetermined value, or that the wind direction has changed from a first predetermined direction to a second predetermined direction. Note that the above-mentioned first and second predetermined values are, for example, the wind speed at the position where the ambulance is placed, and the above-mentioned first and second predetermined directions are, for example, the wind direction at the position where the ambulance is placed.

As a more specific example, a case where the first change information indicates that the ambulance approached listener L and then moved away from listener L will be described. In such cases, wind W generated by the movement of the ambulance blows strongly toward listener L while the ambulance approaches listener L, and blows weakly toward listener L while the ambulance moves away from listener L. Accordingly, the wind speed of wind W blowing toward listener L while ambulance approaches listener L is a high value, and the wind speed of wind W blowing toward listener L while the ambulance moves away from listener L is a low value. In this way, wind W (more specifically, the wind speed of wind W) is changing.

In the present variation, the wind speed of wind W caused by the object, which is the ambulance, is considered to be the same as the moving speed of the ambulance. The moving speed of the ambulance is calculated by differentiating the position of the ambulance in the virtual space with respect to time based on the first position information.

Next, the timing information will be described.

The timing information indicates a predetermined timing related to a change in the object. The predetermined timing indicated by the timing information is the timing of a change in wind W, and more specifically, the timing of a change in wind W due to a change in the position of the object. For example, the predetermined timing is the timing at which the wind speed changes due to a change in the position of the object, and as one example, it is the timing at which the ambulance approaches listener L and then moves away from listener L. In such cases, the predetermined timing is the timing at which the amount of change in the distance over time between the position of listener L and the position of the object in the virtual space transitions from negative to positive. Stated differently, this predetermined timing is the timing at which the object in the virtual space is closest to listener L. As another example, the predetermined timing may be the timing at which the wind direction changes due to a change in the position of the object.

Next, Operation Example 2 of an acoustic signal processing method performed by acoustic signal processing device 100 will be described.

Operation Example 2

FIG. 14 is a flowchart of Operation Example 2 performed by acoustic signal processing device 100 according to the present embodiment. FIG. 15 illustrates ambulance A, which is an object according to Operation Example 2, and listener L.

As illustrated in FIG. 14, first, obtainer 110 obtains object information (S10). As described above, the object information includes first change information indicating a change in the object that causes wind W, timing information indicating the predetermined timing related to the change in the object, second change information indicating the change in wind W due to the change in the object, and first position information indicating the position of the object. The object information includes object sound data indicating the siren sound and geometry information.

Here, the second change information indicates, as a change in wind W due to a change in the object, a change in the wind speed of wind W. The predetermined timing indicated by the timing information is the timing of a change in wind W, and more specifically, the timing of a change in wind W due to a change in the object.

Next, obtainer 110 obtains second position information indicating the position of listener L in the virtual space from headphones 200 (S20). Obtainer 110 further obtains aerodynamic sound data indicating aerodynamic sound stored in storage 140 (S30).

Next, outputter 130 determines whether the predetermined timing has been reached (S35). When the predetermined timing has not been reached (No in step S35), the process of step S35 is repeated.

When the predetermined timing is reached (Yes in step S35), determiner 120 determines the predetermined time based on the wind speed indicated by the second change information and the distance between the position of listener L and the position of the object (ambulance A) (S40).

Then, after the predetermined time from the predetermined timing, outputter 130 then outputs the aerodynamic sound data indicating aerodynamic sound caused by wind W (S60).

Hereinafter, the predetermined timing according to the present operation example and the processing of step S35 will be described in greater detail.

In this operation example, the predetermined timing is the timing of a change in wind W. More specifically, the predetermined timing is the timing at which the wind speed changes due to a change in the position of the object, and the timing at which the amount of change in the distance over time between the position of listener L and the position of the object in the virtual space transitions from negative to positive.

FIG. 16 is a schematic diagram for illustrating the predetermined timing according to Operation Example 2.

Ambulance A moves in the order of (a), (b), and (c) illustrated in FIG. 16. The position of listener L is assumed to be constant while ambulance A moves from (a) to (c). While ambulance A moves from (a) to (b), the amount of change in the distance between the position of listener L and the position of the object in the virtual space is negative. While ambulance A moves from (b) to (c), the amount of change in the distance between the position of listener L and the position of the object in the virtual space is positive. Accordingly, the timing at which the amount of change in the distance transitions from negative to positive is the timing when ambulance A is at the position (b) illustrated in FIG. 16.

Therefore, in step S35, the below processing illustrated in FIG. 17 is performed. FIG. 17 is a flowchart for illustrating the details of step S35 according to Operation Example 2.

After the processing of step S30 is performed, determiner 120 determines whether the timing at which the amount of change in the distance between the position of listener L and the position of the object (ambulance A) in the virtual space transitions from negative to positive (predetermined timing) has been reached (S35a). Note that determiner 120 calculates the distance between the position of listener L and the position of the object (ambulance A), and calculates the amount of change in the distance by differentiating the calculated distance. If "Yes" in step S35a, the processing of step S40 is performed, and if "No" in step S35a, the process of step S35 is repeated.

Furthermore, the predetermined time according to the present operation example will be described in greater detail.

In a real-world space, listener L hears the aerodynamic sound at a timing upon elapse of the time it takes wind W caused by ambulance A to reach listener L, from the timing at which the amount of change in distance between the position of listener L and the position of the object transitions from negative to positive. As described above, the timing at which the amount of change in the distance transitions from negative to positive is the timing when the object is closest to listener L, and is the predetermined timing. Accordingly, determiner 120 may determine the time from the predetermined timing until wind W caused by ambulance A reaches listener L as the predetermined time.

In this operation example, the predetermined time is determined based on the same concept as FIG. 13A described in Operation Example 1. That is, as illustrated in FIG. 15, the distance between the position of listener L and the position of the object (ambulance A) is defined as D, and more specifically, the distance between the position of ambulance A at the position (b) illustrated in FIG. 16 and the position of listener L is defined as D.

The distance from the position of the object (ambulance A) at which the wind speed of wind W generated by the object, which is ambulance A, becomes So is defined as U. The direction from ambulance A toward listener L is defined as the x-axis direction, and the distance from ambulance A in the x-axis direction is defined as x. Since wind speed V of wind W is inversely proportional to distance x, wind speed V and distance x satisfy the following equation.

$$V = So \times (U/x)$$

The average wind speed up to the position at distance D satisfies the following equation.

[Math. 2]

$$\frac{\int_{U}^{D} So \times \left(\frac{U}{x}\right) dx}{(D - U)} = \frac{So \times U \times (\log(D) - \log(U))}{(D - U)}$$

t, which is the time (predetermined time) from the timing at which the amount of change in distance between the position of listener L and the position of the object transitions from negative to positive (that is, the predetermined timing) until wind W caused by ambulance A, which is the object, reaches listener L, is a value obtained by dividing the distance by the average wind speed, and satisfies the following equation.

$$t = \{(D - U)^2\} / \{So \times U \times (\log(D) - \log(U))\}$$

As described above, in step S60, at the timing when predetermined time t has elapsed from the predetermined timing, the aerodynamic sound data is output.

This allows listener L to hear the aerodynamic sound output from headphones 200 at a timing when an amount of time (predetermined time t) it takes wind W caused by ambulance A to reach listener L elapses from the timing (that is, the predetermined timing) at which the change in the distance between the position of listener L and the position of the object transitions from negative to positive. Accordingly, listener L can hear the aerodynamic sound at the same timing as in real-world space, that is, at an appropriate timing, making it less likely for listener L to feel a sense of incongruity, allowing listener L to experience a sense of realism.

Next, this will be further explained. In a real-world space, listener L hears the aerodynamic sound after a vehicle such as ambulance A has come closest to listener L. Therefore, in the virtual space, when listener L hears the aerodynamic sound before ambulance A has come closest to listener L, listener L feels a sense of incongruity. In Operation Example 2, the timing at which the amount of change in the distance between the position of listener L and the position of the object transitions from negative to positive (that is, the timing at which the object is closest to listener L) is set as the predetermined timing. Accordingly, listener L is able to hear the aerodynamic sound after a vehicle such as ambulance A, which is the object, has come closest to listener L, that is, at an appropriate timing, making it less likely for listener L to feel a sense of incongruity, allowing listener L to experience a sense of realism.

Note that ambulance A is an object that generates sound, namely a siren sound. As illustrated in FIG. 16, when the position of ambulance A changes, that is, when ambulance A moves, outputter 130 may output an object sound signal indicating the siren sound so that listener L hears the siren sound accompanied by the Doppler effect.

As described above, in Operation Example 2, the predetermined timing was the timing at which the amount of change in the distance between the position of listener L and the position of the object transitions from negative to positive, but this example is non-limiting. For example, in another, first example of Operation Example 2, the predetermined timing may be the timing at which the distance between the position of listener L and the position of the object becomes shorter than a predetermined distance (second timing). The predetermined distance is, for example, several meters to several tens of meters, and is a distance indicating that the distance between the position of listener L and the position of the object has sufficiently decreased. The predetermined distance may be, for example, a value specified by the administrator of acoustic signal processing device 100.

In this case, in step S35, the below processing illustrated in FIG. 18 is performed. FIG. 18 is a flowchart for illustrating the details of step S35 according to another, first example of Operation Example 2.

After the processing of step S30 is performed, determiner 120 determines whether the timing at which the distance between the position of listener L and the position of the object (ambulance A) in the virtual space becomes shorter than the predetermined distance (second timing) has been reached (S35b). As described above, if "Yes" in step S35b, the processing of step S40 is performed, and if "No" in step S35b, the process of step S35 is repeated.

In this way, even in another, first example of Operation Example 2, listener L can hear the aerodynamic sound output from headphones 200 at a timing when time it takes wind W caused by ambulance A to reach listener L elapses from the second timing at which the distance between the position of listener L and the position of the object (ambulance A) has sufficiently decreased.

Next, another, second example of Operation Example 2 will be described. In this another, second example of Operation Example 2, in step S35, both processes of steps S35a and S35b illustrated in FIG. 17 and FIG. 18 are performed. If both step S35a and step S35b are "Yes," the processing of step S40 is performed, and if at least one of step S35a or step S35b is "No," the process of step S35 is repeated. Such processing described in the other second example of operation example 2 may be performed.

Next, pipeline processing will be described.

Some or all of the processing performed by acoustic signal processing device 100 described above may be carried out as part of pipeline processing as described in, for example, PTL 2. FIG. 19 illustrates one example of a functional block diagram and steps for explaining a case where renderers A0203 and A0213 of FIG. 6 and FIG. 7 perform pipeline processing. Renderer 900, which is one example of renderers A0203 and A0213 of FIG. 6 and FIG. 7, will be used for the explanation of FIG. 19.

Pipeline processing refers to dividing the processing for applying sound effects into a plurality of processes and executing each process one by one in order. The divided processes include, for example, signal processing on the audio signal, generation of parameters used for signal processing, etc.

Renderer 900 according to the present embodiment includes, as pipeline processing, processes that apply effects such as reverberation effect, early reflection processing, distance attenuation effect, and binaural processing. However, the above-described processing is one example, and may include other processes, or may omit some of the processes. For example, renderer 900 may include diffraction processing or occlusion processing as pipeline processing, or reverberation processing may be omitted if it is unnecessary. Each process may be expressed as a stage, and the audio signals such as reflected sounds generated as a result of each process may be expressed as rendering items. The order of each stage in the pipeline processing and the stages included in the pipeline processing are not limited to the example illustrated in FIG. 19.

Note that renderer 900 need not include all stages illustrated in FIG. 19, and some stages may be omitted or other stages may be outside of renderer 900.

As one example of pipeline processing, processing performed in each of reverberation processing, early reflection processing, distance attenuation processing, selection processing, generation processing, and binaural processing will be described. In each processing, the metadata included in the input signal is analyzed, and parameters necessary for generating reflected sounds are calculated.

In FIG. 19, renderer 900 includes reverberation processor 901, early reflection processor 902, distance attenuation processor 903, selector 904, calculator 906, generator 907, and binaural processor 905. Here, an example will be described in which reverberation processor 901 performs a reverberation processing step, early reflection processor 902 performs an early reflection processing step, distance attenuation processor 903 performs a distance attenuation processing step, selector 904 performs a selection processing step, and binaural processor 905 performs a binaural processing step.

In the reverberation processing step, reverberation processor 901 generates an audio signal indicating reverberation sound or parameters necessary for generating the audio signal. Reverberation sound is a sound that includes reverberation sound reaching the listener as reverberation after the direct sound. As one example, the reverberation sound is reverberation sound that reaches the listener at a relatively late stage (for example, approximately 100 to 200 ms after the arrival of the direct sound) after the early reflected sound (to be described later) reaches the listener, and after undergoing more reflections (for example, several tens of times) than the early reflected sound. Reverberation processor 901 refers to the audio signal and spatial information included in the input signal, and performs calculations using a prepared, predetermined function for generating reverberation sound.

Reverberation processor 901 may generate reverberation by applying a known reverberation generation method to the sound signal. One example of a known reverberation generation method is the Schroeder method, but the method used is not limited to this example. Reverberation processor 901 uses the shape and an acoustic property of a sound reproduction space indicated by the spatial information when the known reverberation generation processing is applied. Accordingly, reverberation processor 901 can calculate parameters for generating an audio signal that indicates reverberation.

In the early reflection processing step, early reflection processor 902 calculates parameters for generating early reflection sounds based on the spatial information. The early reflected sound is reflected sound that reaches the listener at a relatively early stage (for example, approximately several tens of ms after the arrival of the direct sound) after the direct sound from the sound source object reaches the listener, and after undergoing one or more reflections. Early reflection processor 902 references, for example, the sound signal and metadata, and calculates the path (path length) of reflected sound that reaches the listener after being reflected by objects, using the shape and size of the three-dimensional sound field (space), the positions of objects such as structures, and the reflectance of objects, from the sound source object. Early reflection processor 902 may calculate the path of the direct sound (path length). The information indicating said path may be used as a parameter for generating the early reflected sound, as well as a parameter for selection processing of reflected sound in selector 904.

In the distance attenuation processing step, distance attenuation processor 903 calculates the loudness of sound reaching the listener based on the difference between the length of the direct sound path and the length of the reflected sound path calculated by early reflection processor 902. The loudness of sound reaching the listener attenuates in proportion to the distance to the listener (inversely proportional to the distance) relative to the loudness of the sound source. Therefore, the loudness of the direct sound can be obtained by dividing the loudness of the sound source by the length of the direct sound path, and the loudness of the reflected sound can be calculated by dividing the loudness of the sound source by the length of the reflected sound path.

In the selection processing step, selector 904 selects the sound to be generated. The selection processing may be executed based on parameters calculated in previous steps.

When the selection processing is executed as part of the pipeline processing, sounds that were not selected in the selection processing need not be subjected to processing subsequent to the selection processing in the pipeline processing. Not executing processing subsequent to the selection processing for sounds that were not selected enables a reduction in the computational load of acoustic signal processing device 100 more so than when it is decided to only not execute binaural processing for the sounds that were not selected.

When the selection processing described in the present embodiment is executed as part of the pipeline processing, if the selection processing is set to be executed earlier in the order of the plurality of processes in the pipeline processing, more processing subsequent to the selection processing can be omitted, thereby enabling a greater reduction in the amount of computation. For example, if the selection processing is executed prior to the processing by calculator 906 and generator 907, processing for aerodynamic sound related to objects determined not to be selected can be omitted, enabling a further reduction in the amount of computation in acoustic signal processing device 100.

Parameters calculated as part of the pipeline processing for generating rendering items may be used by selector 904 or calculator 906.

In the binaural processing step, binaural processor 905 performs signal processing on the audio signal of the direct sound so that it is perceived as sound reaching the listener from the direction of the sound source object. Furthermore, binaural processor 905 performs signal processing so that the reflected sound is perceived as sound reaching the listener from the obstacle object involved in the reflection. Based on the coordinates and orientation of the listener in the sound space (i.e., the position and orientation of the listening point), processing is executed to apply HRIR (Head-Related Impulse Response) DB (Database) so that sound reaches the listener from the position of the sound source object or the position of the obstacle object. The position and direction of the listening point may be changed according to the movement of the listener's head, for example. Information indicating the position of the listener may be obtained from a sensor.

The program used for pipeline processing and binaural processing, spatial information necessary for acoustic processing, the HRIR DB, and other parameters such as threshold data are obtained from memory included in acoustic signal processing device 100 or from an external source. Head-Related Impulse Response (HRIR) is the response characteristic when one impulse is generated. Stated differently, HRIR is the response characteristic that is converted from an expression in the frequency domain to an expression in the time domain by Fourier transforming the head-related transfer function, which represents the change in sound caused by surrounding objects including the auricle, the head, and the shoulders as a transfer function. The HRIR DB is a database including such information.

As one example of pipeline processing, renderer 900 may include a processor (not illustrated). For example, renderer 900 may include a diffraction processor or an occlusion processor.

The diffraction processor executes processing to generate an audio signal indicating sound including diffracted sound caused by an obstacle between the listener and the sound source object in a three-dimensional sound field (space). Diffracted sound is sound that, when there is an obstacle between the sound source object and the listener, reaches the listener from the sound source object by going around the obstacle.

The diffraction processor references, for example, the sound signal and metadata, and calculates the path by which sound reaches the listener from the sound source object by detouring around the obstacle, using the position of the sound source object in the three-dimensional sound field (space), the position of the listener, and the position, shape, and size of the obstacle, etc., and generates diffracted sound based on the calculated path.

The occlusion processor generates an audio signal that seeps through when a sound source object is on the other side of an obstacle object, based on spatial information obtained in any step and information such as the material of the obstacle object.

In the above embodiment, the position information assigned to the sound source object is defined as a "point" in the virtual space, and the details of the invention are described as being a so-called "point sound source". However, as a method for defining a sound source in the virtual space, a spatially extended sound source that is not a point sound source may be defined as an object having length, size, or shape. In such cases, since the distance between the listener and the sound source or the direction of sound arrival is not determined, the resulting reflected sound may be limited to the "selected" processing by selector 904 mentioned above, without analysis being performed, or regardless of the analysis results. This is because by doing so, it is possible to avoid the sound quality degradation that might occur by not selecting the reflected sound. Alternatively, a representative point such as the center of gravity of the object may be determined, and the processing of the present disclosure may be applied as if sound is generated from that representative point. In such cases, the processing of the present disclosure may be applied after adjusting a threshold in accordance with the information on the spatial extension of the sound source.

Next, an example structure of the bitstream will be described.

The bitstream includes, for example, an audio signal and metadata. The audio signal is sound data representing sound, indicating information such as the frequency and intensity of the sound. The spatial information included in the metadata is information related to the space in which the listener of the sound that is based on the audio signal is positioned. More specifically, the spatial information is information about a predetermined position (localization position) in the sound space (for example, within a three-dimensional sound field) when localizing the sound image of the sound at that predetermined position, that is, when causing the listener to perceive the sound as reaching from a predetermined direction. The spatial information includes, for example, sound source object information and position information indicating the position of the listener.

The sound source object information is information about an object indicating a physical object that generates sound based on the audio signal, i.e., reproduces the audio signal, and is information related to a virtual object (sound source object) placed in a sound space, which is a virtual space corresponding to the real-world space in which the physical object is placed. The sound source object information includes, for example, information indicating the position of the sound source object located in the sound space, information about the orientation of the sound source object, information about the directivity of the sound emitted by the sound source object, information indicating whether the sound source object belongs to an animate thing, and information indicating whether the sound source object is a mobile body. For example, the audio signal corresponds to one or more sound source objects indicated by the sound source object information.

As one example of the data structure of the bitstream, the bitstream includes, for example, metadata (control information) and an audio signal.

The audio signal and metadata may be stored in a single bitstream or may be separately stored in plural bitstreams. Similarly, the audio signal and metadata may be stored in a single file or may be separately stored in plural files.

The bitstream may exist for each sound source or may exist for each playback time. When bitstreams exist for each playback time, a plurality of bitstreams may be processed in parallel simultaneously.

Metadata may be assigned to each bitstream, or may be collectively assigned as information for controlling a plurality of bitstreams. The metadata may be assigned for each playback time.

When the audio signal and metadata are stored separately in a plurality of bitstreams or a plurality of files, the audio signal and metadata may be included in information indicating another bitstream or file relevant to one or some of the bitstreams or files, or the audio signal and metadata may be included in information indicating another bitstream or file relevant to each of all the bitstreams or files. Here, the relevant bitstream or file is, for example, a bitstream or file that may be used simultaneously during acoustic processing. The relevant bitstream or file may include a bitstream or file that collectively describes information indicating other relevant bitstreams or files. Here, information indicating other relevant bitstreams or files is, for example, an identifier indicating the other bitstream, a file name indicating the other file, a uniform resource locator (URL), or a uniform resource identifier (URI). In such cases, obtainer 110 identifies or obtains a bitstream or file based on information indicating other relevant bitstreams or files. The bitstream may include information indicating another bitstream relevant to the bitstream as well as information indicating a bitstream or file relevant to another bitstream or file within the bitstream. Here, the file including information indicating the relevant bitstream or file may be, for example, a control file such as a manifest file used for content distribution.

Note that the entire metadata or part of the metadata may be obtained from somewhere other than a bitstream of the audio signal. For example, metadata for controlling an acoustic sound or metadata for controlling a video may be obtained from somewhere other than from a bitstream or both may be obtained from somewhere other than from a bitstream. When metadata for controlling a video is included in a bitstream obtained by the audio signal reproduction system, the audio signal reproduction system may have a function of outputting metadata that can be used for controlling a video to a display device that displays images or to a stereoscopic video reproduction device that reproduces stereoscopic videos.

Next, examples of information included in the metadata will be described further.

The metadata may be information used to describe a scene expressed in the sound space. As used herein, the term "scene" refers to a collection of all elements that represent three-dimensional video and acoustic events in the sound space, which are modeled in the audio signal reproduction system using metadata. Thus, metadata as used herein may include not only information for controlling acoustic processing, but also information for controlling video processing. Of course, the metadata may include information for controlling only acoustic processing or video processing, or may include information for use in controlling both.

The audio signal reproduction system generates virtual acoustic effects by performing acoustic processing on the audio signal using the metadata included in the bitstream and additionally obtained interactive listener position information. Here, a case will be described where early reflection processing, obstacle processing, diffraction processing, occlusion processing, and reverberation processing are performed as sound effects, but other acoustic processing may be performed using the metadata. For example, the audio signal reproduction system may add acoustic effects such as distance decay effect, localization, and Doppler effect. In addition, information for switching between on and off of all or one or more of the acoustic effects, and priority information may be added as metadata.

As an example, encoded metadata includes information about a sound space including a sound source object and an obstacle object and information about a localization position when the sound image of the sound is localized at a predetermined position in the sound space (i.e., the sound is perceived as reaching from a predetermined direction). Here, an obstacle object is an object that can influence a sound emitted by a sound source object and perceived by the listener, by, for example, blocking or reflecting the sound between the sound source object and the listener. An obstacle object can include an animal such as a person or a movable body such as a machine, in addition to a stationary object. When a plurality of sound source objects are present in a sound space, another sound source object may be an obstacle object for a certain sound source object. Non-sound-emitting objects such as building materials or inanimate objects, and sound source objects that emit sound can both be obstacle objects.

The metadata includes all or part of information indicating the shape of the sound space, geometry information and position information of obstacle objects present in the sound space, geometry information and position information of sound source objects present in the sound space, and the position and orientation of the listener in the sound space.

The sound space may be either a closed space or an open space. The metadata includes information indicating the reflectance of each structure that can reflect sound in the sound space, such as floors, walls, and ceilings, and the reflectance of each obstacle object present in the sound space. Here, the reflectance is an energy ratio between a reflected sound and an incident sound, and is set for each sound frequency band. Of course, the reflectance may be uniformly set, irrespective of the sound frequency band. When the sound space is an open space, for example, parameters such as a uniformly set attenuation rate, diffracted sound, and early reflected sound may be used.

In the above description, reflectance is mentioned as a parameter with regard to an obstacle object or a sound source object included in metadata, but the metadata may include information other than reflectance. For example, information other than reflectance may include information on the material of an object as metadata related to both of a sound source object and a non-sound-emitting object. More specifically, the information other than reflectance may include parameters such as diffusivity, transmittance, and sound absorption rate.

For example, information on a sound source object may include information for designating the loudness, a radiation property (directivity), a reproduction condition, the number and types of sound sources emitted by one object, and a sound source region of an object. The reproduction condition may determine that a sound is, for example, a sound that is continuously being emitted or is emitted at an event. The sound source region in the object may be determined based on the relative relationship between the position of the listener and the position of the object, or determined with respect to the object. When the sound source region in the object is determined based on the relative relationship between the position of the listener and the position of the object, with respect to the plane of the object the listener is looking at, the listener can be made to perceive that sound C is emitted from the right side of the object and sound E is emitted from the left side of the object as seen from the listener. When the sound source region in the object is determined based on the object as a reference, which sound is emitted from which region of the object can be fixed, irrespective of the direction in which the listener is viewing. For example, the listener can be made to perceive that high-pitched sound comes from the right side and low-pitched sound comes from the left side when looking at the object from the front. In such cases, if the listener goes around to the back of the object, the listener can be made to perceive that low-pitched sound comes from the right side and high-pitched sound comes from the left side when looking at the object from the back.

Metadata related to the space may include, for example, the time until early reflected sound, the reverberation time, and the ratio of direct sound to diffuse sound. When the ratio between a direct sound and a diffused sound is zero, the listener can be caused to perceive only a direct sound.

Advantageous Effects, etc.

An acoustic signal processing method according to an embodiment of the present disclosure includes: obtaining object information indicating a change in an object that causes wind W and a predetermined timing related to the change in the object; and outputting aerodynamic sound data indicating an aerodynamic sound due to the wind W, after a predetermined time from the predetermined timing indicated by the obtained object information, the predetermined time being based on the change in the object.

This allows for the aerodynamic sound data to be output at a timing when the predetermined time has elapsed from the predetermined timing. Therefore, listener L can hear the aerodynamic sound at an appropriate timing, making it less likely for listener L to feel a sense of incongruity and allowing listener L to experience a sense of realism. Stated differently, an acoustic signal processing method capable of providing listener L with a sense of realism is realized.

For example, as described in Operation Example 1, the predetermined timing is, for example, the timing of a change in wind W, and the predetermined time is, for example, the time it takes for wind W caused by electric fan F to reach listener L.

For example, as described in Operation Example 2, the predetermined timing is, for example, the timing of a change in wind W, and the predetermined time is, for example, the time it takes for wind W caused by ambulance A to reach listener L.

In the cases shown in Operation Examples 1 and 2, listener L can hear the aerodynamic sound at the same timing as in real-world space, that is, at an appropriate timing, making it less likely for listener L to feel a sense of incongruity, allowing listener L to experience a sense of realism. Thus, the acoustic signal processing method according to the embodiment is capable of providing listener L with a sense of realism.

For example, the predetermined timing may be a timing specified by a user (a specified timing), and the time specified by the user may be the predetermined time. In such cases, the user specifies the timing and time so that listener L can hear the aerodynamic sound at the same timing as in real-world space, and the specified timing and time may be the predetermined timing and predetermined time. In this case as well, listener L can hear the aerodynamic sound at the same timing as in real-world space, that is, at an appropriate timing, making it less likely for listener L to feel a sense of incongruity, allowing listener L to experience a sense of realism.

In the acoustic signal processing method according to an embodiment of the present disclosure, the object information indicates: a change in wind W due to a change in the object; and that the predetermined timing is a timing of the change in wind W. The acoustic signal processing method further includes determining the predetermined time based on wind W indicated by the obtained object information.

This allows for the aerodynamic sound data to be output at a timing when the predetermined time determined based on wind W has elapsed from the timing when wind W changes, enabling listener L to hear the aerodynamic sound at a more appropriate timing.

In the acoustic signal processing method according to an embodiment of the present disclosure, the change in wind W indicated by the object information indicates a change in wind speed of wind W, and in the determining, the predetermined time is determined based on the wind speed.

With this, the predetermined time is determined based on wind speed, thus enabling listener L to hear the aerodynamic sound at a more appropriate timing.

In the acoustic signal processing method according to an embodiment of the present disclosure, the aerodynamic sound is a sound generated at the wind speed after the change.

Accordingly, the aerodynamic sound that listener L hears in the virtual space can be made to more closely resemble the aerodynamic sound that listener L hears in the real-world space.

In the acoustic signal processing method according to an embodiment of the present disclosure, the object information indicates the position of the object. The acoustic signal processing method further includes determining the predetermined time based on a distance between a position of listener L of the aerodynamic sound and the position of the object indicated by the obtained object information.

With this, the predetermined time is determined based on the distance, thus enabling listener L to hear the aerodynamic sound at a more appropriate timing.

In the acoustic signal processing method according to an embodiment of the present disclosure, the object information indicates the position of the object. In the determining, the predetermined time is determined based on the wind speed and a distance between a position of listener L of the aerodynamic sound and the position of the object indicated by the obtained object information.

With this, the predetermined time is determined based on the wind speed and the distance, thus enabling listener L to hear the aerodynamic sound at a more appropriate timing.

In the acoustic signal processing method according to an embodiment of the present disclosure, the object information indicates that the predetermined timing is a first timing at which to output sound data associated with the object. In the outputting, the aerodynamic sound data is output after the predetermined time from the first timing indicated by the obtained object information.

With this, when the object is an object that generates sound, the aerodynamic sound data can be output at a timing when the predetermined time has elapsed from the first timing at which the sound is output, thus enabling listener L to hear the aerodynamic sound at a more appropriate timing.

For example, as described in Operation Example 1, when the object is electric fan F and generates motor noise, the predetermined timing is, for example, the timing at which electric fan F is switched from OFF to ON. Listener L can hear the aerodynamic sound output from headphones 200 at a timing when the time it takes wind W caused by electric fan F to reach listener L (i.e., the predetermined time) elapses from the predetermined timing. Accordingly, listener L can hear the aerodynamic sound at the same timing as in real-world space, that is, at an appropriate timing, making it less likely for listener L to feel a sense of incongruity, allowing listener L to experience a sense of realism. Thus, the acoustic signal processing method according to the embodiment is capable of providing listener L with a sense of realism.

In the acoustic signal processing method according to a variation of an embodiment, the object information indicates: a position of the object; and that the predetermined timing is a second timing at which a distance between a position of listener L of the aerodynamic sound and the position of the object will become shorter than a predetermined distance. In the outputting, the aerodynamic sound data is output after the predetermined time from the second timing indicated by the obtained object information.

This allows for the aerodynamic sound data to be output at a timing when the predetermined time has elapsed from the second timing when the distance becomes shorter than the predetermined distance, i.e., when the object approaches listener L, enabling listener L to hear the aerodynamic sound at a more appropriate timing.

For example, as described in Operation Example 2, the predetermined timing is, for example, the timing at which the amount of change in the distance between the position of listener L and the position of the object transitions from negative to positive. Listener L can hear the aerodynamic sound output from headphones 200 at a timing when time it takes wind W caused by ambulance A to reach listener L (i.e., the predetermined time) elapses from the predetermined timing. Accordingly, listener L can hear the aerodynamic sound at the same timing as in real-world space, that is, at an appropriate timing, making it less likely for listener L to feel a sense of incongruity, allowing listener L to experience a sense of realism. Thus, the acoustic signal processing method according to the variation of the embodiment is capable of providing listener L with a sense of realism.

In the acoustic signal processing method according to an embodiment of the present disclosure, the object information indicates: that a change in wind W due to a change in the object is a change in the direction of wind W; and that the predetermined timing is a third timing of an occurrence of the change in the direction of wind W. In the outputting, the aerodynamic sound data is output after the predetermined time from the third timing indicated by the obtained object information.

This allows for the aerodynamic sound data to be output at a timing when the predetermined time has elapsed from the third timing when the change in the direction of wind W occurs, enabling listener L to hear the aerodynamic sound at a more appropriate timing.

In the acoustic signal processing method according to an embodiment of the present disclosure, the object is an object that generates: a sound indicated by sound data associated with the object; and wind W, and the aerodynamic sound is an aerodynamic sound generated by wind W reaching listener L, wind W being generated by the object.

Accordingly, the object can be electric fan F or the like that generates sound and wind W, and the aerodynamic sound caused by wind W blown from the object can be realized.

In the acoustic signal processing method according to an embodiment of the present disclosure, D is defined as the distance, and U is defined as the distance from a position of the object at which wind speed becomes So. When the predetermined time is defined as t, t satisfies the following equation.

$$t = \{(D - U)^2\} / \{So \times U \times (\log(D) - \log(U))\}$$

This allows the determining step to determine the time from the predetermined timing until wind W generated by the object reaches listener L as the predetermined time. Therefore, the aerodynamic sound data can be output at a timing after such a predetermined time has elapsed from the predetermined timing, enabling listener L to hear the aerodynamic sound at a more appropriate timing.

For example, as described in Operation Example 1, in the determining step, the time it takes for wind W caused by electric fan F to reach listener L can be determined as the predetermined time. Therefore, listener L can hear the aerodynamic sound at the same timing as in real-world space, that is, at an appropriate timing, making it less likely for listener L to feel a sense of incongruity, allowing listener L to experience a sense of realism. Thus, the acoustic signal processing method according to the embodiment is capable of providing listener L with a sense of realism.

In the acoustic signal processing method according to a variation of an embodiment of the present disclosure, the object is an object that generates wind W due to movement of the position of the object, and the aerodynamic sound is an aerodynamic sound generated by wind W reaching listener L, wind W being generated by the movement.

Accordingly, the object can be a vehicle or the like that generates wind W due to movement, and the aerodynamic sound caused by wind W generated by the movement can be realized.

In the acoustic signal processing method according to a variation of an embodiment of the present disclosure, the predetermined timing indicated by the object information is a timing at which an amount of change in the distance over time transitions from negative to positive.

This allows for the aerodynamic sound data to be output at a timing when the predetermined time has elapsed from the timing when the distance between listener L and the object becomes the shortest, enabling listener L to hear the aerodynamic sound at a more appropriate timing.

In the acoustic signal processing method according to a variation of an embodiment of the present disclosure, D is defined as the distance, and U is defined as the distance from a position of the object at which wind speed of wind W due to the movement is So. When the predetermined time is defined as t, t satisfies the following equation.

$$t = \{(D - U)^2\} / \{So \times U \times (\log(D) - \log(U))\}$$

This allows the determining step to determine the time from the predetermined timing until wind W generated by the object reaches listener L as the predetermined time. Therefore, the aerodynamic sound data can be output at a timing after such a predetermined time has elapsed from the predetermined timing, enabling listener L to hear the aerodynamic sound at a more appropriate timing.

For example, as described in Operation Example 2, in the determining step, the time it takes for wind W caused by ambulance A to reach listener L can be determined as the predetermined time. Therefore, listener L can hear the aerodynamic sound at the same timing as in real-world space, that is, at an appropriate timing, making it less likely for listener L to feel a sense of incongruity, allowing listener L to experience a sense of realism. Thus, the acoustic signal processing method according to the embodiment is capable of providing listener L with a sense of realism.

A computer program according to the embodiment is for causing a computer to execute the above-described acoustic signal processing method.

Accordingly, the computer can execute the acoustic signal processing method described above in accordance with the computer program.

Acoustic signal processing device 100 according to an embodiment of the present disclosure includes: obtainer 110 that obtains object information indicating a change in an object that causes wind W and a predetermined timing related to the change in the object; and outputter 130 that outputs aerodynamic sound data indicating an aerodynamic sound due to the wind W, after a predetermined time from the predetermined timing indicated by the obtained object information, the predetermined time being based on the change in the object.

This allows for the aerodynamic sound data to be output at a timing when the predetermined time has elapsed from the predetermined timing. Therefore, listener L can hear the aerodynamic sound at an appropriate timing, making it less likely for listener L to feel a sense of incongruity and allowing listener L to experience a sense of realism. Stated differently, acoustic signal processing device 100 capable of providing listener L with a sense of realism is realized.

Other Embodiments

While an acoustic signal processing method and an acoustic signal processing device according to the present disclosure have been described above based on embodiments and variations, the present disclosure is not limited to these embodiments and variations. For example, other embodiments resulting from freely combining the elements described in the present specification or excluding some of the elements may be included as embodiments of the present disclosure. The present disclosure also encompasses variations that result from applying, to the embodiments and variations, various modifications that may be conceived by those skilled in the art without departing from the spirit of the present disclosure, that is, within a range that does not depart from the scope of the language of the claims.

In the above embodiment, although the object is exemplified as electric fan F, the object is not limited to this example. Next, an object that generates wind W will be exemplified.

The object that generates wind W may be, for example, an object such as a window or door through which wind W blows in. In the virtual space, in an example where listener L is inside a building and wind W is blowing outside the building, wind W blows into the building through an open window or door, and as a result, listener L hears the aerodynamic sound. In this example, the timing when the window or door opens corresponds to the predetermined timing, and wind W is generated at the position of the window or door, allowing the technique of the present disclosure to be applied.

The object that generates wind W may be, for example, an object such as a vent or exhaust port through which wind W blows out. In the case of wind W blowing out from a vent or exhaust port, it is meaningless to precisely define the position where wind W is generated in the virtual space, and so the technique of the present disclosure can be applied by assuming wind W is generated at the position of the outlet of the vent or exhaust port. In this case, the predetermined timing can be determined by the administrator of the virtual space or the administrator of acoustic signal processing device 100. For example, an input interface included in acoustic signal processing device 100 may receive the timing specified by the administrator, and determiner 120 may determine the timing received by the input interface as the predetermined timing.

The embodiments shown below may be included in the scope of one or more aspects of the present disclosure.

(1) One or more of the elements included in the acoustic signal processing device may be a computer system that includes a microprocessor, ROM, RAM, a hard disk unit, a display unit, a keyboard, and a mouse, for instance. A computer program is stored in the RAM or the hard disk unit. The microprocessor achieves its functionality by operating in accordance with the computer program. Here, the computer program includes a combination of instruction codes indicating instructions to a computer in order to achieve predetermined functionality.

(2) One or more of the elements included in the acoustic signal processing device described above may include a single system large scale integration (LSI) circuit. A system LSI circuit is ultra-multifunctional LSI circuit manufactured by integrating a plurality of processing units on a single chip, and specifically, is a computer system including a microprocessor, ROM, RAM and the like. The RAM stores a computer program. The microprocessor operates according to the computer program, thereby enabling the system LSI circuit to achieve its functionality.

(3) One or more of elements included in the acoustic signal processing device described above may include IC card or a standalone module which can be attached to or detached from the device. The IC card or the module is a computer system including a microprocessor, ROM, RAM, and any other suitable elements. The IC card or the module may be included in the above-described ultra-multifunctional LSI circuit. The IC card or the module achieves its functionality by the microprocessor operating in accordance with the computer program. The IC card or the module may be tamper resistant.

(4) One or more of the elements of the acoustic signal processing device described above may be a computer program or digital signal stored on a non-transitory computer-readable recording medium, examples of which include a flexible disk, a hard disk, CD-ROM, MO, DVD, DVD-ROM, DVD-RAM, Blu-ray (registered trademark) disc (BD), semiconductor memory, and other media. Alternatively, one or more of the elements may be realized as a digital signal stored in such a recording medium.

One or more of the elements of the acoustic signal processing device described above may be realized by transmitting the computer program or digital signal over an electrical communication line, a wireless or wired communication line, a network typified by the Internet, or via data broadcasting, for instance.

(5) The present disclosure may be a method described above. The present disclosure may be a computer program that realizes such a method using a computer or a digital signal that includes the computer program.

(6) The present disclosure may be a computer system that includes a microprocessor and memory, the memory may store the computer program, and the microprocessor may operate in accordance with the computer program.

(7) The present disclosure may be implemented by another independent computer system by recording the program or the digital signal on the recording medium and transferring it, or by transferring the program or the digital signal via the network or the like.

[Industrial Applicability]

The present disclosure is applicable to an acoustic signal processing method and an acoustic signal processing device, and is particularly applicable to acoustic systems and the like.

[Reference Signs List]

100 acoustic signal processing device
110 obtainer
120 determiner
130 outputter
140 storage
200 headphones
201 head sensor
202 outputter
300 display
900 renderer
901 reverberation processor
902 early reflection processor
903 distance attenuation processor
904 selector
905 binaural processor
906 calculator
907 generator
A ambulance
A0000 three-dimensional sound reproduction system
A0001 acoustic signal processing device

A0002 audio presentation device
A0100 encoding device
A0101 input data
A0102 encoder
A0103 encoded data
A0104 memory
A0110 decoding device
A0111 audio signal
A0112 decoder
A0113 input data
A0114 memory
A0120 encoding device
A0121 transmitter
A0122 transmission signal
A0130 decoding device
A0131 receiver
A0132 reception signal
A0200 decoder
A0201 spatial information manager
A0202 audio data decoder
A0203 renderer
A0210 decoder
A0211 spatial information manager
A0213 renderer
F electric fan
L listener

## Claims

1. An acoustic signal processing method comprising:

   obtaining object information indicating a change in an object that causes wind and a predetermined timing related to the change in the object; and
   outputting aerodynamic sound data indicating an aerodynamic sound due to the wind, after a predetermined time from the predetermined timing indicated by the object information obtained, the predetermined time being based on the change in the object.

2. The acoustic signal processing method according to claim 1, wherein

   the object information indicates:

      a change in the wind due to the change in the object; and
      that the predetermined timing is a timing of the change in the wind, and

   the acoustic signal processing method further comprises determining the predetermined time based on the wind indicated by the object information obtained.

3. The acoustic signal processing method according to claim 2, wherein

   the change in the wind indicated by the object information indicates a change in a wind speed of the wind, and
   in the determining, the predetermined time is determined based on the wind speed.

4. The acoustic signal processing method according to claim 3, wherein
   the aerodynamic sound is a sound generated at the wind speed after the change.

5. The acoustic signal processing method according to claim 1, wherein

the object information indicates a position of the object, and

the acoustic signal processing method further comprises determining the predetermined time based on a distance between a position of a listener of the aerodynamic sound and the position of the object indicated by the object information obtained.

6. The acoustic signal processing method according to claim 3, wherein

the object information indicates a position of the object, and

in the determining, the predetermined time is determined based on the wind speed and a distance between a position of a listener of the aerodynamic sound and the position of the object indicated by the object information obtained.

7. The acoustic signal processing method according to claim 1, wherein

the object information indicates that the predetermined timing is a first timing at which to output sound data associated with the object, and

in the outputting, the aerodynamic sound data is output after the predetermined time from the first timing indicated by the object information obtained.

8. The acoustic signal processing method according to claim 1, wherein

the object information indicates:

a position of the object; and

that the predetermined timing is a second timing at which a distance between a position of a listener of the aerodynamic sound and the position of the object will become shorter than a predetermined distance, and

in the outputting, the aerodynamic sound data is output after the predetermined time from the second timing indicated by the object information obtained.

9. The acoustic signal processing method according to claim 1, wherein

the object information indicates:

that a change in the wind due to the change in the object is a change in a direction of the wind; and

that the predetermined timing is a third timing of an occurrence of the change in the direction of the wind, and

in the outputting, the aerodynamic sound data is output after the predetermined time from the third timing indicated by the object information obtained.

10. The acoustic signal processing method according to claim 6, wherein

the object is an object that generates: a sound indicated by sound data associated with the object; and the wind, and

the aerodynamic sound is an aerodynamic sound generated by the wind reaching the listener, the wind being generated by the object.

11. The acoustic signal processing method according to claim 10, wherein

t satisfies the following equation:

$$t = \{(D - U)^2\} / \{So \times U \times (\log(D) - \log(U))\}$$

where D is the distance,
U is a distance from a position of the object at which the wind speed is So, and
t is the predetermined time.

12. The acoustic signal processing method according to claim 6, wherein

the object is an object that generates the wind due to movement of the position of the object, and
the aerodynamic sound is an aerodynamic sound generated by the wind reaching the listener, the wind being due
the movement.

13. The acoustic signal processing method according to claim 12, wherein
the predetermined timing indicated by the object information is a timing at which an amount of change in the distance
over time transitions from negative to positive.

14. The acoustic signal processing method according to claim 12, wherein

t satisfies the following equation:

$$t = \{(D - U)^2\} / \{So \times U \times (\log(D) - \log(U))\}$$

where D is the distance,
U is a distance from a position of the object at which the wind speed of the wind due the movement is So, and
t is the predetermined time.

15. A computer program for causing a computer to execute the acoustic signal processing method according to any one of claims 1 to 14.

16. An acoustic signal processing device comprising:

an obtainer that obtains object information indicating a change in an object that causes wind and a predetermined
timing related to the change in the object; and
an outputter that outputs aerodynamic sound data indicating an aerodynamic sound due to the wind, after a
predetermined time from the predetermined timing indicated by the object information obtained, the predetermined time being based on the change in the object.

# FIG. 1

A0000

Three-dimensional sound reproduction system

Acoustic signal processing device

Audio presentation device
A0002

A0001

EP 4 607 963 A1

FIG. 2

Encoder A0102

Memory A0104

A0101

A0103

Encoding device

A0100

FIG. 3

Decoder A0112

Memory A0114

A0111

A0113

Decoding device

A0110

# FIG. 4

A0102    A0121

A0101 → Encoder →A0103→ Transmitter → A0122

Encoding device

A0120

# FIG. 5

A0112    A0131

A0111 ← Decoder ←A0113← Receiver ← A0132

Decoding device

A0130

## FIG. 6

A0202

Audio data decoder

A0201

Spatial information manager

A0203

Renderer

A0113

A0111

Decoder

A0200

## FIG. 7

A0211

Spatial information manager

A0213

Renderer

A0113

A0111

Decoder

A0210

# FIG. 8

Acoustic signal processing device

Loudspeaker

Processor

Communication I/F

Memory

Sensor

# FIG. 9

Encoding device

Processor

Communication I/F

Memory

FIG. 10

FIG. 10 block diagram: Server device (500) → Obtainer (110) within Acoustic signal processing device (100). Obtainer → Determiner (120) → Outputter (130). Display (300) receives from within the device. Storage (140). Outputter → Headphones (200), which contains Head sensor (201) and Outputter (202). Head sensor feeds back to Obtainer.

EP 4 607 963 A1

# FIG. 11

START

S10

Obtain object information indicating: change in object that causes wind; change in wind (wind speed) due to change in object; predetermined timing (timing of change in wind); and position of object

S20

Obtain second position information indicating position of listener

S30

Obtain aerodynamic sound data indicating aerodynamic sound

S40

Determine predetermined time based on wind (wind speed) and distance between position of listener and position of object

S50

Output sound data associated with object at predetermined timing

S60

Output aerodynamic sound data indicating aerodynamic sound caused by wind, after predetermined time from predetermined timing

END

EP 4 607 963 A1

FIG. 12

Aerodynamic sound
(output after predetermined time
from predetermined timing)

L

W

F

Motor noise
(output at predetermined
timing (first timing))

43

## FIG. 13A

Motor noise

F

W

x

Aerodynamic sound

L

D

U

Wind speed So at distance U

EP 4 607 963 A1

# FIG. 13B

Predetermined timing
Electric fan F: OFF → ON

Electric fan F: ON → OFF

(a)

1

0

(b)

Predetermined
time t

1

0

(c)

Amplitude

Time

EP 4 607 963 A1

# FIG. 13C

# FIG. 14

START

**S10**
Obtain object information indicating: change in object that causes wind; change in wind (wind speed) due to change in object; predetermined timing (timing of change in wind); and position of object

**S20**
Obtain second position information indicating position of listener

**S30**
Obtain aerodynamic sound data indicating aerodynamic sound

**S35**
Predetermined timing reached? — No

Yes

**S40**
Determine predetermined time based on wind (wind speed) and distance between position of listener and position of object

**S60**
Output aerodynamic sound data indicating aerodynamic sound caused by wind, after predetermined time from predetermined timing

END

# FIG. 15

# FIG. 16

(c)

A

(a)

A

A

(b)

Predetermined timing

D

Aerodynamic sound
(output after predetermined time
 from predetermined timing)

L

## FIG. 17

S30

S35

Predetermined timing reached? S35a

Timing at which amount of change in distance between position of listener and position of object transitions from negative to positive (predetermined timing) reached?

No

Yes

S40

## FIG. 18

S30

S35

Predetermined timing reached? S35b

Second timing at which distance between position of listener and position of object becomes shorter than predetermined distance (predetermined timing) reached?

No

Yes

S40

# FIG. 19

900

**Renderer**

901

Reverberation processor

902

Early reflection processor

903

Distance attenuation processor

904

Selector

906

Calculator

907

Generator

905

Binaural processor

## INTERNATIONAL SEARCH REPORT

| International application No. |
|---|
| **PCT/JP2023/036004** |

| A. | CLASSIFICATION OF SUBJECT MATTER |
|---|---|

*H04S 7/00*(2006.01)i
FI: H04S7/00 300

According to International Patent Classification (IPC) or to both national classification and IPC

| B. | FIELDS SEARCHED |
|---|---|

Minimum documentation searched (classification system followed by classification symbols)

H04S7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 110972053 A (TENCENT MUSIC ENTERTAINMENT TECHNOLOGY (SHENZHEN) CO., LTD.) 07 April 2020 (2020-04-07) entire text, all drawings | 1-16 |
| A | WO 2020/255810 A1 (SONY CORP.) 24 December 2020 (2020-12-24) entire text, all drawings | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2023** | **26 December 2023** |

| Name and mailing address of the ISA/JP | Authorized officer |
|---|---|
| **Japan Patent Office (ISA/JP) 3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/036004**

| Patent document cited in search report | | | Publication date (day/month/year) | Patent family member(s) | | | Publication date (day/month/year) |
|---|---|---|---|---|---|---|---|
| CN | 110972053 | A | 07 April 2020 | US | 2022/0286781 | A1 | |
| WO | 2020/255810 | A1 | 24 December 2020 | US | 2022/0360931 | A1 | |
| | | | | entire text, all drawings | | | |
| | | | | EP | 3989605 | A1 | |
| | | | | CN | 113994716 | A | |
| | | | | KR | 10-2022-0023348 | A | |

Form PCT/ISA/210 (patent family annex) (January 2015)

**EP 4 607 963 A1**

**Patent documents cited in the description**

- JP 2013201577 A

- WO 2021180938 A